(19) Europäisches Patentamt

European Patent Office

Office européen des brevets

(11) **EP 0 583 418 B1**

(12) **EUROPEAN PATENT SPECIFICATION**

(45) Date of publication and mention
of the grant of the patent:
**28.08.2002   Bulletin 2002/35**

(21) Application number: **92914048.1**

(22) Date of filing: **04.05.1992**

(51) Int Cl.⁷: $G01S\ 13/00$, $G01S\ 13/93$,
$G01S\ 13/53$, $G01S\ 13/534$,
$G01S\ 13/24$

(86) International application number:
**PCT/US92/03687**

(87) International publication number:
**WO 92/019980 (12.11.1992 Gazette 1992/28)**

(54) **MULTI-FREQUENCY AUTOMOTIVE RADAR SYSTEM**

MEHRFREQUENZ-RADARSYSTEM FÜR FAHRZEUGE

SYSTEME RADAR A PLUSIEURS FREQUENCES POUR VEHICULES

(84) Designated Contracting States:
**AT BE CH DE DK ES FR GB GR IT LI NL SE**

(30) Priority: **06.05.1991   US 695951**
        **16.08.1991   US 745928**
        **06.09.1991   US 756176**

(43) Date of publication of application:
**23.02.1994   Bulletin 1994/08**

(73) Proprietor: **IVHS TECHNOLOGIES, INC.**
**San Diego, CA 92127 (US)**

(72) Inventors:
• **ASBURY, Jimmie, R.**
**San Diego, CA 92192 (US)**

• **DAVIS, John, W.**
**Encinitas, CA 92124 (US)**

(74) Representative: **Patentanwälte**
**Rüger, Barthelt & Abel**
**Postfach 10 04 61**
**73704 Esslingen a.N. (DE)**

(56) References cited:
US-A- 3 176 294        US-A- 3 576 564
US-A- 3 742 497        US-A- 3 750 172
US-A- 3 778 826        US-A- 3 898 655
US-A- 3 952 303        US-A- 3 967 283
US-A- 4 129 856        US-A- 4 148 027
US-A- 4 236 140        US-A- 4 673 937
US-A- 4 740 045

**Description**

**BACKGROUND OF THE INVENTION**

1. *Field of the Invention*

The invention Is directed to radar devices and more particularly to (1) special circuits for use in modulated CW or pulse Doppler radar for enabling the radar to distinguish not only the phase differences (Doppler) between returning echo signals from one or more targets but also distinguish amplitude differences between the one or more targets and lock the attention of the radar onto a selected echo signal and continue to monitor that specific target echo so long as that target is of particular interest as determined by the radar system, (2) special circuits for conditioning selected portions of the Doppler frequency spectrum to attenuate or de-emphasize portions of the echo signal corresponding to selected targets in the radar system environment, such as rain or stationary wayside objects, in order to give such echo signals less weight in determining roadway hazards, and (3) a target persistence and environment filter for such devices for preventing the radar device from giving false alarms due to brief target echoes resulting from birds or wayside objects.

2. *Description of Related Art*

United States Patent No. 4,673,937 issued to John W. Davis on June 16, 1987 and assigned to the Assignee of the present invention teaches a vehicle borne radar system presently believed to be at the leading edge of the vehicle borne radar art.
However, the above-referenced radar system is not able to distinguish one individual target echo signal from a plurality of incoming target echo signals of approximately the same amplitude and lock on to that particular target echo signal until that target echo signal is replaced by a new particular target echo signal.
There is a continuing need to improve the safety of highway vehicles operation for preventing impact with moving and stationary objects and to safely increase the density of vehicles traveling the world's roadways by monitoring the distance, speed and direction of travel between one vehicle following another thereon to conserve available road space by safely increasing the number of vehicles on a given roadway at any given time and yet maintain a higher than now possible degree of safety for the passengers carried by those vehicles.
The present invention relates to an improved vehicle borne radar system for monitoring possible dangerous conditions for a particular vehicle traveling on a vehicle roadway.
It is also known, as shown for example by U. S. patent 3,952,303 of Watanabe et al, to transmit and receive at three different frequencies on a time division basis, with two of the frequencies being used to determine range, closing speed and likelihood of collision and the third frequency being combined with one of the first two to determine direction. However, three frequency systems are capable of even further simplification in the circuitry thereof using different techniques of determining the desired information. Moreover, the transmit and receive frames containing the frequencies can be wasteful in that only small portions thereof are needed to receive and segregate the signals of different frequency, with the remaining portions being unused.
US-A-3 750 172 discloses a CW radar system which is adapted to transmit consecutive time frames. Each a time frame is subdivided in three time windows. During each of the windows of a time frame a radar signal is transmitted at a frequency which differs from the frequencies being used during the other two windows of the same frame. The receiving and evaluating a circuit of the radar system is active throughout the complete time period of each window.
There is also a continuing need to condition the return echo signal from an automotive collision avoidance radar system in order to generate meaningful information from a very complex sequence of events. In such a system, the radar system transmits an RF signal outward through an antenna. If an object (target) is present, it reflects the RF signal. A very small part of the reflected signal is returned to the antenna. Target detection runs from very good to non-existent, even when a strongly reflecting target is present. Although radar target backscatter phenomenon is fairly well understood for distant targets and free space, the muhizude of target sizes and shapes near a road surface can cause unusual problems for the processing circuitry of an automotive collision avoidance radar system. In particular, reflections from such environmental targets as rain, as well as non-threatening but strongly reflecting wayside targets such as overpasses, signs, etc., can obscure the information generated from a more threatening target in the environment (such as an on-coming automobile). Therefore, it would be desirable to condition the received Doppler frequency spectrum on a selected basis in order to de-emphasize non-threatening targets in comparison to targets having a higher probability of presenting a threat to a vehicle.

**OBJECTS OF THE INVENTION**

One of the objects of the present invention is to provide a novel collision avoidance system for a vehicle, which system will monitor a plurality of potential obstacles or targets and select the most prominent target for continuous monitoring. Included herein is such a system which will automatically lock onto the selected target until a more prominent target appears at which time the system will lock onto the more prominent target. Further included herein is such a system that will change monitoring from one target to another virtually instantaneously.

Another object of this invention is to improve the accuracy of vehicle borne radar systems by eliminating ambiguous echo signals from targets received by the radar.

Yet another object of this invention is to improve the accuracy of vehicle borne radar systems by reducing the effect of ambiguous echo signals from targets received by the radar.

Yet another object of the present invention is to provide a vehicle borne radar system that gives operator indications of whether or not a target has been selected for monitoring.

A further object of the present invention is to provide a two or more radar frequency system in which the received signals of different frequency are processed and combined in a manner which provides the desired information in accurate fashion using simplified circuitry.

A still further object of the present invention is to provide a multi-frequency radar system in which unused portions of the receive frame are identified and segregated so that they may be used in conjunction with one or more subsystems of the radar system.

Yet another object of the present invention is to provide a Doppler frequency spectrum de-emphasis function for an automotive collision avoidance radar system. In particular, it is an object of the present invention to condition the received Doppler frequency spectrum on a selected basis in order to de-emphasize non-threatening targets in comparison to targets having a higher probability of presenting a hazard to a vehicle.

Yet another object of the present invention is to provide a radar system having a target persistence and environment filter for preventing the radar system from giving false alarms due to short duration target echoes resulting from transitory objects (birds) or wayside objects.

## SUMMARY OF THE INVENTION

The present invention is used in a system that advances vehicle operation safety by providing a radar vehicle expert warning system that allows the vehicle operator to continue his or her normal safe driving habits under safe conditions as defined by a first zone and warns that operator when his or her normal safe driving conditions go from the first safe zone to a second, hazard zone by providing a warning to the operator that the established safe driving conditions of the first zone are being exceeded by entry into the second zone and that impact with another object will occur unless the operator returns to a driving condition within the first, safe zone. The warning is in sufficient time for the operator to correct the dangerous condition in a normal and expected manner by slowing or stopping the vehicle before impact or turning the vehicle into a new path of travel whereby the object is bypassed. This is accomplished by the expert radar system continually monitoring the forward path of travel of a vehicle equipped with the expert system of this invention and providing a warning to the vehicle operator if that driver's normal zone is exceeded.

The invention is specifically directed to a vehicle borne expert radar system for alerting the vehicle operator of a dangerous vehicle condition in sufficient time for the operator of the vehicle to respond to that warning to avoid the dangerous condition, such as, a collision with another object. The system is designed to prevent needless disruption of the operator when the vehicle is not in a dangerous situation by appearing to be inactive. The system monitors a plurality of targets within a selected range and locks onto the most prominent target thereby eliminating all other targets until a more prominent target appears. The system gathers radar produced information directed to range the most prominent (dangerous) object relative to the vehicle to which the radar has locked onto and the closing rate of that selected object. The radar produced information is then summed with driving condition modifiers such as, by way of example only, the vehicle forward speed, steering angle, acceleration and braking in a radar signal processor. A headway control algorithm weighs the importance of these various inputs to be summed at a value which is relative to each other and to a preselected predetermined reference value according to their level of importance. The algorithm assumes that a minimum of three vehicle operation zones exist, namely, a safe zone, normal or alert zone and a hazardous or danger zone. These zones are determined in part by the habits of the particular vehicle operator, i.e., a conservative operator vehicle would have a smaller safe zone than a normally aggressive operator. When the algorithm results in a summed output signal level which falls in a given operator's safe zone the radar remains active but produces no driver warning. When the summed output signal level of the algorithm exceeds the safe zone and enters the hazardous zone the radar provides an output signal for warning the operator of the dangerous condition and will continue to warn the operator more dramatically as the level of danger increases, i.e., if the signal of the algorithm increases in a positive direction. For example, a conservative operator might have a maximum safe zone level of 390 units and an aggressive vehicle operator might have a maximum safe zone level of 410 units. If the factors considered by the algorithm produce 388 units for the first operator no radar warnings will be produced. Likewise, when the algorithm signal level output for the more aggressive operator reaches 409 units the safe zone will not be exceeded and, therefore, the radar will produce no operator warning (normal warning level 400 units). If the algorithm output level exceeds 390, 400 or 410 respectively the radar will produce an operator warning of an impending hazard or impact with an object. The first warning is timely to provide the operator time to either brake or turn to prevent impact with the detected object. If the first warning is not heeded by the operator, another warning will be produced by the radar again in time to use evasive action to avoid impact with the detected object if immediately acted upon by the operator. Warnings will be provided by the radar until either the object has been averted by an active maneuver by the operator or impact occurs. These operator warnings produced by the radar increase in intensity and emotion as the hazard increases not unlike the emotions of a person witnessing an increasingly dangerous condition and becoming more and more excited thereby, i.e., the first warning could be for example a soft spoken word or words and the level of a subsequent word or words could become increasingly more emotional by tone and/or volume. The final warning before impact could be in the form of a "scream" signal.

Further, in accordance with the invention the radar system may take advantage of a multi-frequency transmission system and the simplified circuitry which results. In a first embodiment of the invention using three frequencies, a continuously transmitted radar signal within a succession of transmit time intervals, or "frames", is transmitted, first at a frequency which is a fixed amount below a reference frequency, then at a frequency above the reference frequency by a fixed amount, and then at the reference frequency. Timing circuitry within the receiver portion of the radar system defines a succession of receive intervals, or "frames" that correspond to the transmit frames. Each receive frame is used to identify radar signals reflected back from a target at one of the three frequencies and to route such signals to a selected channel corresponding to the frequency. Received signals at one frequency are routed to a Doppler channel, while received signals at the other two frequencies are routed to a pair of range channels. The rate of phase shift within the Doppler channel is measured to provide an indication of the closing rate (positive or negative) of the target, while the phase shift difference between the pair of range channels is measured to provide an indication of the range and direction of the target. Signals representing the closing rate, range, direction, vehicle speed and other parameters are conditioned in a manner which concentrates on the strongest signal among a plurality of reflected signals, then applied to a data processor which may be used to implement the headway control algorithm to determine the hazard level and provide warnings as necessary.

Still further in accordance with the invention, the transmit and receive frames may be divided into a plurality of time interval windows. Within the transmit frame, each transmitted frequency is confined to an interval comprising a subset of all of the windows comprising the frame similarly, within the receive frame, each similarly, within the receive frame, each reflected frequency is received In an interval comprising a subset of the windows comprising the frame. The remaining windows, within the transmit and receive frames, are thereby freed, and may be used for transmission and receipt of signals in connection with subsystems of the radar system, such as those using wayside transponders to provide useful information.

Still further in accordance with the present invention, the audio-frequency Doppler spectrum of echo signals received from targets is selectively conditioned or deemphasized such that the echo signals from rain and/or strongly reflecting wayside targets (e.g., overpasses, signs, etc.) are attenuated, and thus taken into lesser consideration by the processing circuitry of the automotive collision avoidance radar system in determining the presence of a potential roadway hazard. In one embodiment of the invention, the de-emphasis is accomplished by means of a low-pass filter, which in the preferred embodiment is selectively switchable between no de-emphasis, de-emphasis at a first level, and de-emphasis at a second level greater than the first level. In a second preferred embodiment, a steerable notch filter is provided that provides greater de-emphasis for target echo signals from targets having a speed near the speed of the user's vehicle. The degree of the de-emphasis in the second preferred embodiment is preferably selectable between at least two leve!s, in order to provide greater de-emphasis during particular conditions, such as during rain. The preferred embodiments of the present invention can be implemented using either analog or digital circuitry to accomplish the inventive function.

The invention also includes a target persistence and environment filter comprising a Doppler direction detector circuit and a resetable delay circuit. If a received echo signal does not persist long enough to propagate through the delay circuit, the delay circuit is reset. This means that the target echo signal must persist at least for the duration of the delay circuit propagation time or the signal is considered to be from a receding (and hence non-threatening) object.

The above and other objects, features and advantages of the present invention will become more apparent from the following description of the preferred embodiment of the invention taken in conjunction with the accompanying drawing figures.

## BRIEF DESCRIPTION OF THE DRAWING FIGURES

FIGURE 1 is a showing of FIGURE 2 of the Patent No. 4,673,937.
FIGURE 2 is a showing of FIGURE 2A of the Patent No. 4,673,937.
FIGURE 3 is a showing of FIGURE 2B of the Patent No. 4,673,937.
FIGURE 4 is a showing of FIGURE 2C of the Patent No. 4,673,937.
FIGURES 5A, 5B and 5C show circuits embodying the present invention as incorporated in the circuit shown in patent No. 4,673,937.
FIGURE 6 shows diagrammatic representations of the transmit and receive frames used in conjunction with the circuits of FIGURES 5A, B and C, and also illustrating windowed three-frequency transmission and receipt of radar signals In accordance with the invention.

FIGURE 7 is a block diagram of the front-end circuit of a radar system using the windowed three-frequency frames of FIGURE 6.

FIGURE 8 is a somewhat more detailed block diagram of a portion of the front-end circuit of FIGURE 7.

FIGURE 9 comprises waveforms illustrating the sampling of phase shifts within different channels as provided by the front-end circuit of FIGURE 7.

FIGURE 10 comprises a plot of samples within a sample closing rate envelope illustrating phase sampling within the channels as provided by the front-end circuit of FIGURE 7.

FIGURE 11 is a block diagram of a signal conditioning circuit for use with the front-end circuit of FIGURE 7.

FIGURE 12 is a block diagram of a digital signal processor embodiment of the present invention.

FIGURE 12A is a schematic diagram showing the preferred embodiment of the target persistence and environment fitter circuit of the present invention.

FIGURE 12B is a first example waveform of the inputs to the circuit shown in FIGURE 12A.

FIGURE 12C is a second example waveform of the inputs to the circuit shown in FIGURE 12A.

FIGURE 13 is a diagram showing the amount of attenuation of target echo signals as a function of received Doppler frequency, showing "normal" conditioning, for one embodiment of the present invention.

FIGURE 14 is a diagram showing the amount of attenuation of target echo signals as a function of received Doppler frequency, showing a first level of conditioning ("freeway" conditioning) for one embodiment of the present invention.

FIGURE 15 is a diagram showing the amount of attenuation of target echo signals as a function of received Doppler frequency, showing a second level of conditioning ("rain" conditioning) for one embodiment of the present invention.

FIGURE 16 is a schematic diagram of an analog version of one embodiment of the present invention.

FIGURE 17 is a diagram showing the amount of attenuation of target echo signals as a function of received Doppler frequency, showing "variable environment" conditioning, for one embodiment of the present invention.

FIGURE 18 is a block diagram of a circuit for implementing the "variable environment" conditioning function shown in FIGURE 17(1257), FIGURE 18(1257) is a block diagram of a circuit for implementing the "variable environment" conditioning function shown in FIGURE 17(1257), in accordance with the present invention.

Uke reference numbers and designations in the drawings refer to like elements.

## DETAILED DESCRIPTION OF THE PREFERRED EMBODIMENT

Referring now to drawing FIGURES 1-4, an explanation of these drawings can be found in the above-referenced United States Patent No. 4,673,937 assigned to the same assignee as this invention.

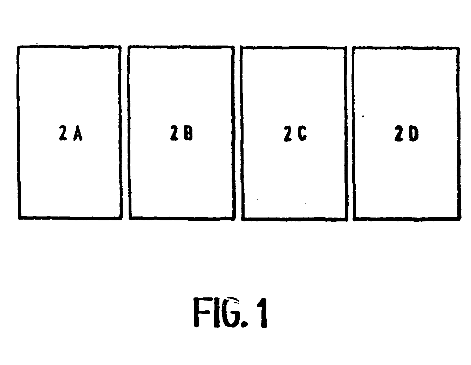

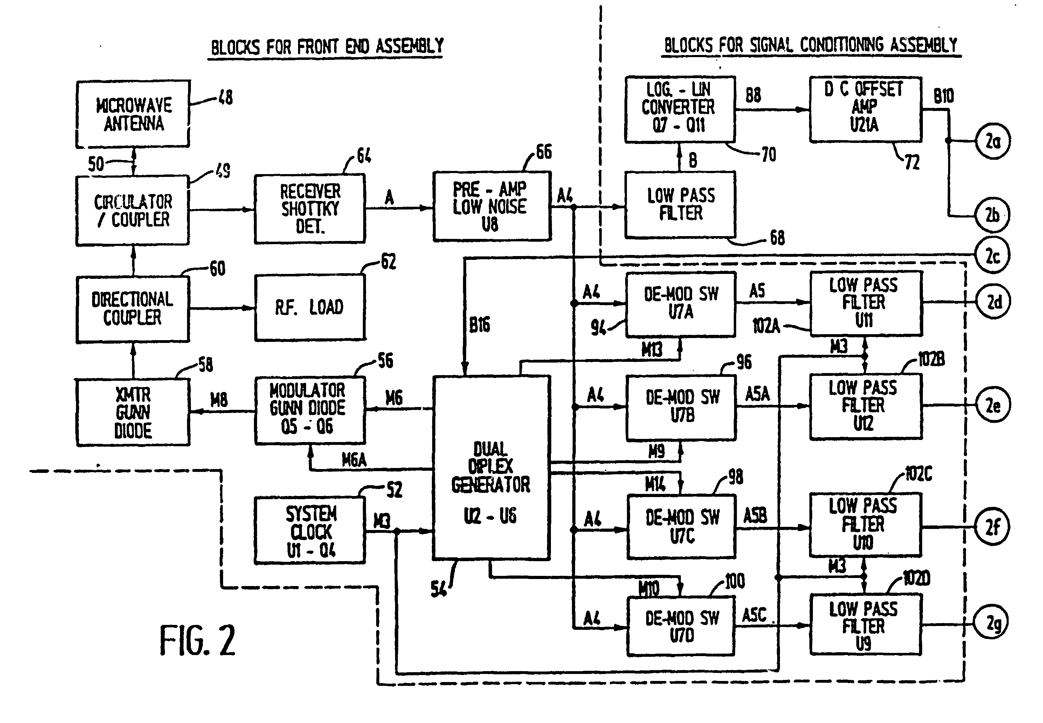

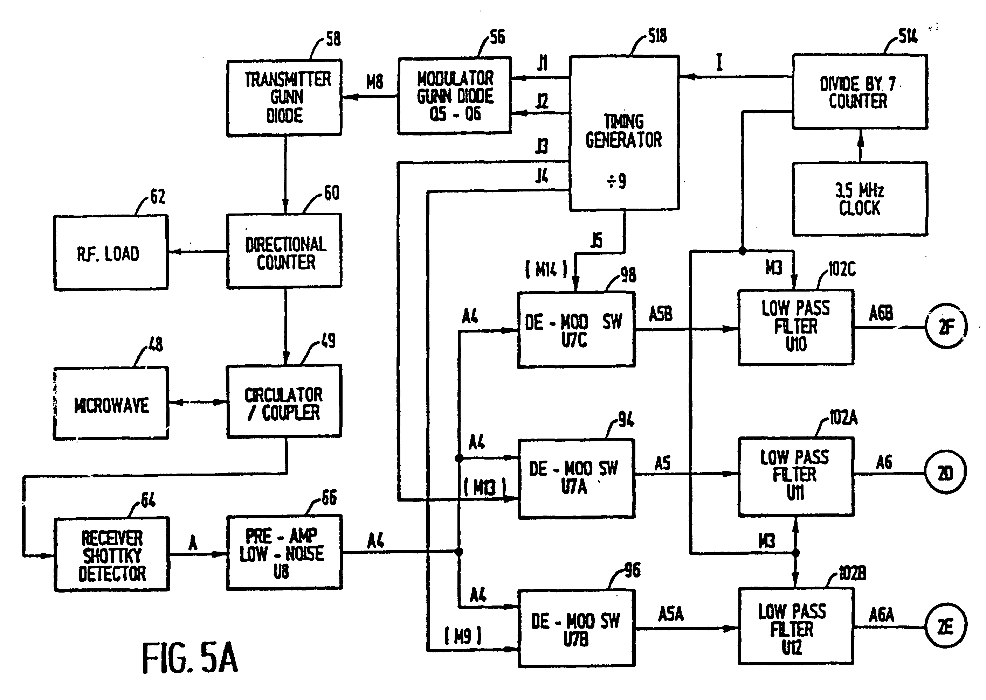

Referring now to drawing FIGURE 2, the circuit of this figure is a showing of FIGURE 2A of the Davis patent 4,673,937 which is modified by replacing the system clock 52 and the dual diplex generator 54 with a 3.5 MHz clock 516, a divide by seven counter 514 and a timing generator 518 connected to the circuit as shown in drawing FIGURES 5A-5D; eliminating the low pass filter 68 and the de-mod sw 100 and the low pass filter 102D. Also A6B is connected the input B to the log-lin converters 70 and to the Doppler control channel P.

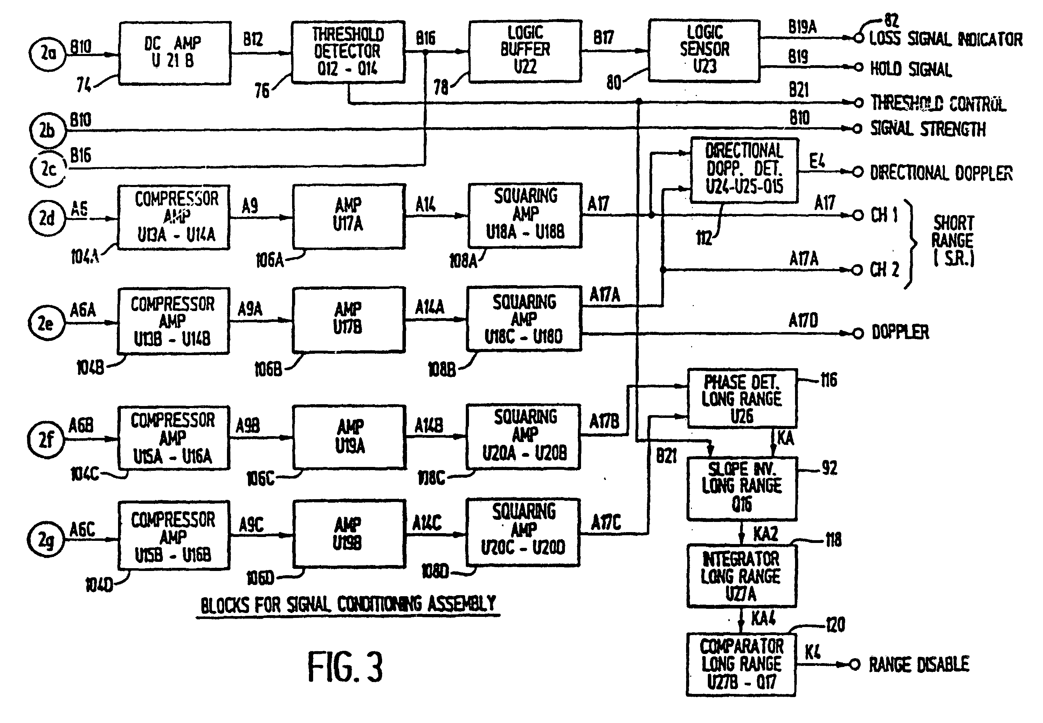

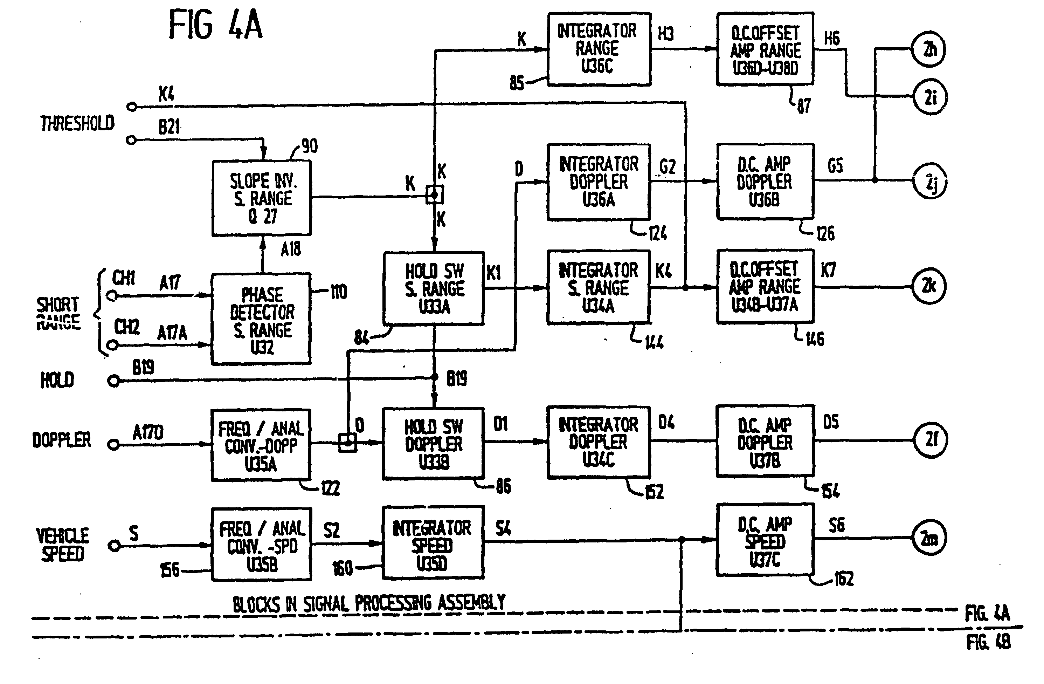

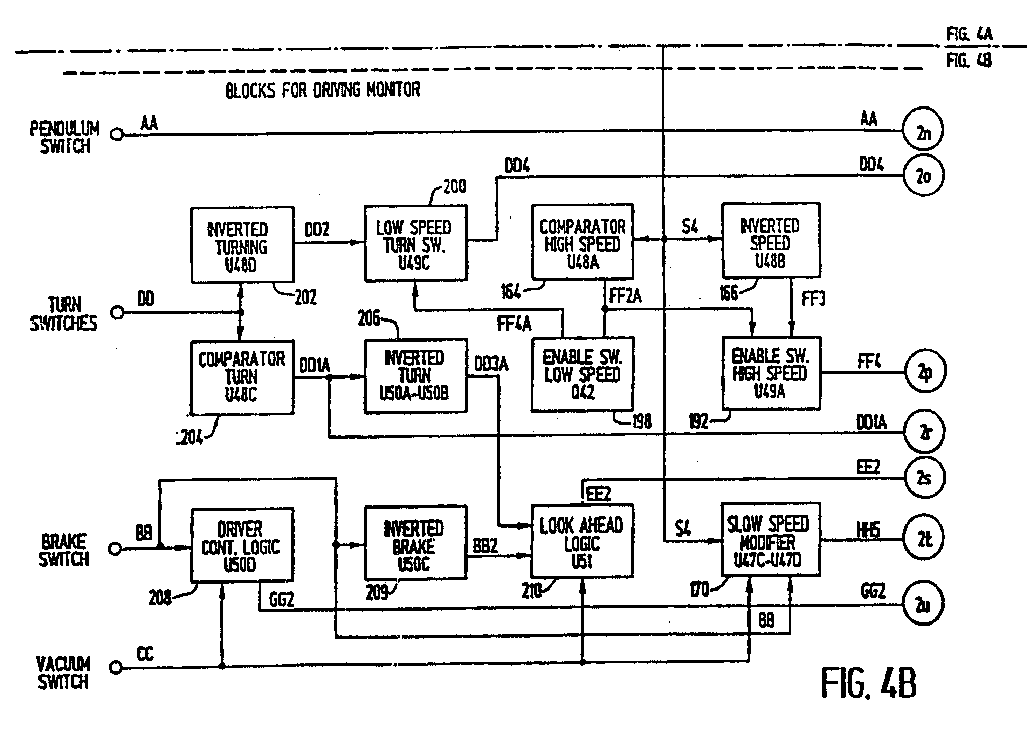

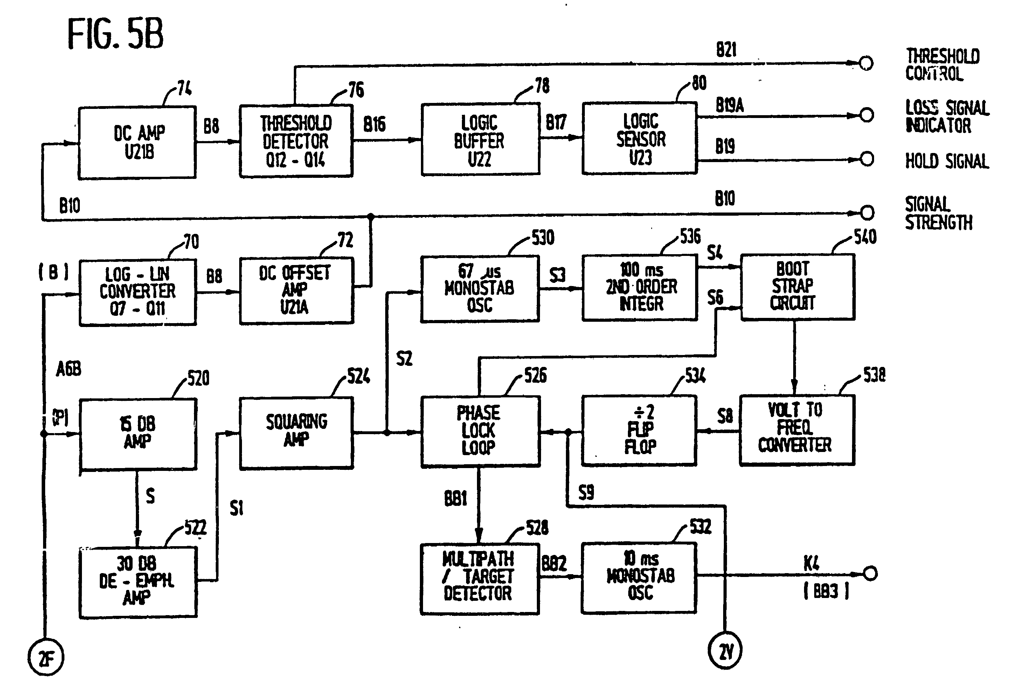

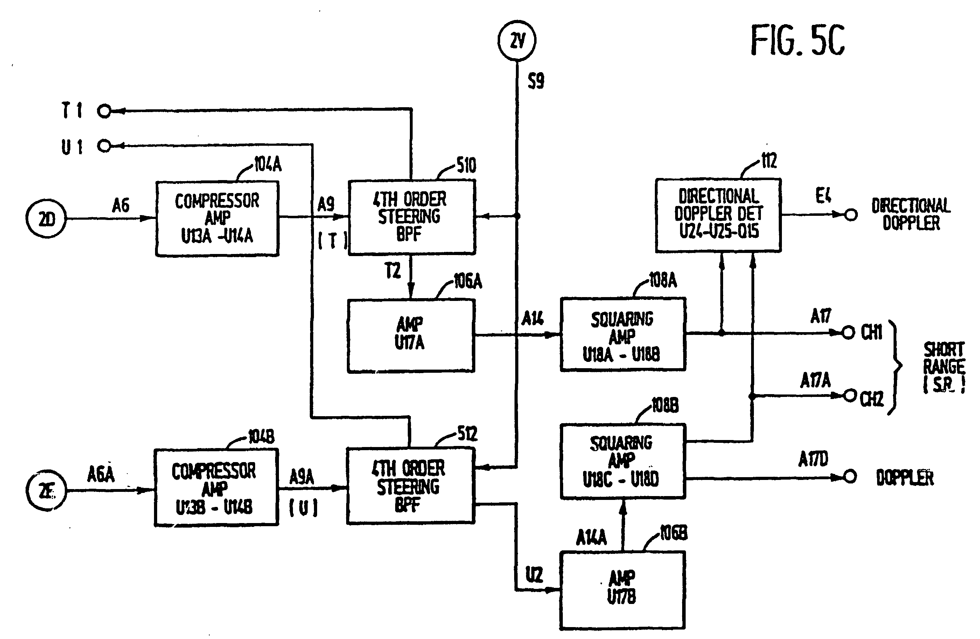

Referring now specifically to drawing FIGURE 3 which is a showing of drawing FIGURE 2B of the Patent No. 4,673,937. In this drawing figure the modification includes inserting the steering bandpass filters 510 and 512, as shown in drawing FIGURE 5 between compressor amps 104A and 104B;, then eliminating amps 106A, 106B, compressor amps 104C and 104D, amps 106C and 106D, squaring amps 108C and 108D, phase detector 116, slope inverter long range 92, integrator long range 118, comparator long range 120 and connecting the range disable point K4 to BB3 of drawings FIGURES 5A-5D.

Referring now to drawing FIGURE 4 which is a showing of drawing FIGURE 2C of the Patent No. 4,673,937, this portion of the latter and remaining circuits remain unchanged.

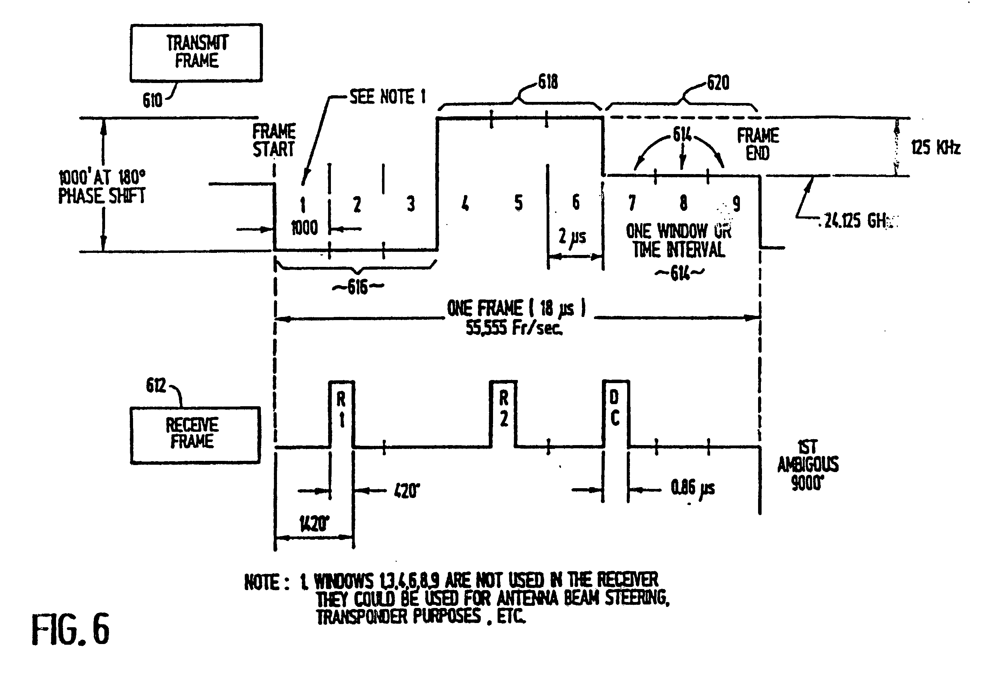

Referring now to drawing FIGURES 5A, B, C and 6, the new circuits shown Include a divide by seven counter 514, a 3.5 MHz clock 516, a timing generator 518, fourth order steering band pass filters 510 and 512, a 15 db amplifier 520, a 30 db deemphasis amplifier 522, a squaring amplifier 524, a phase lock loop 526, a multipath/target detector 528, a 67 microsecond monostable oscillator 530, a 10 millisecond monostable oscillator 532, a divide by 2 flip flop 534, a 100 milli-second 2nd order integrator 536, a voltage-to-frequency convertor 538 and a boot strap circuit 540. The listed new components of drawing FIGURES 5A, B and C are positioned and wired to each other and to the circuits shown in Patent No. 4,673,937 as shown.

Referring now to the operation of the present invention as shown in drawing FIGURES 5 and 6, in addition to the phase, and rate of phase change (Doppler), the amplitude differences between several targets are evaluated by the Doppler control channel or circuits which includes 520-524 ("S-S2") and are used for target selection.

The amplitude of a principal or prominent target echo at the transmitter center frequency is determined in time sequence interval 7, see drawing FIGURE 6. The Doppler rate of the principal target produces a proportional frequency in both range channels T and U and in the Doppler channel S. The range channels A6-A17 and A6A-A17A provide symmetrical and very accurate phase shift processing while disregarding amplitude differences. The Doppler control channel S, on the other hand, disregards phase shift but carefully preserves relative amplitude differences. It is these amplitude differences that are being used to distinguish targets, and by means of a steerable phase lock loop S2-S9 to tune the radar receiver to the most prominent target.

At the output of the Doppler control channel at S2 the frequency-to-voltage converter (FVC), consists of a one shot monostable oscillator 530 and a low pass filter 536, (well known in the art), which generate a Doppler voltage input to the bootstrap circuit 540 of the Doppler control channel.

The faster the closing rate, the higher the Doppler voltage. The Doppler voltage is 0-5 VDC, where 5 volts is equal to a Doppler rate of 200 mph. The Doppler voltage is summed with the output error voltage of the phase lock loop 526 (PLL) phase comparator "S6" and then applied to a voltage-to-frequency converter (VFC) "S7". The frequency converter output is 128 times the Doppler frequency "S9" and is applied to the phase lock loop 526 and the two range channels T and U to tune the center frequency of the steering band pass filters (SBPFs) 510 and 512 within a frequency range of 20 Hz to 14.4 KHz that is proportional to a Doppler rate between about 0.3 and 200 mph. The tuned band pass frequency of the SBPFs Is the output frequency of the VFC 538 divided by 256 "S8" and is the frequency of the SBPF clock S9. This frequency is selected and maintained in both range channels "T2, U2" when the PLL has locked onto one of the multitude of frequencies (different targets) present in the Doppler channel "S". These frequencies result from: radar echoes from multiple targets, a signal echo returning by multiple paths, and echoes from reflecting objects that are too far away to be targets of interest. The PLL lock frequency is the frequency in the Doppler channel that has the largest amplitude "S1". This amplitude depends on the target and strength of the radar echo, which decreases as the distance to the target increases.

In this way, the range channel phase information that has been obtained from the most prominent target, is selected for further range processing by the SBPFs in the two ranging channels "T2, U2". Due to the amplitude discrimination occurring in the Doppler control channel "S1", which locks the phase lock loop to that target "S2-S9", all other target phase information is attenuated before entering the remaining range channel conditioning circuits. This Doppler control system enables the system to select or isolate a single target from many others.

Within a Doppler frequency span of between 20 Hz and 14.4 KHz (about 0.3 to 200 mph) "S2", the exact tuning of the SBPF depends on the steering voltage "S7" to bring the phase lock loop into lock. This voltage "S7", in turn, is derived from the sum of the Doppler voltage "S4", and the output error voltage of the phase lock detector "S6". The use of a frequency-to-voltage converter (FVC) "S2-S4" to increase the sum of the output bootstrapping of the phase lock comparator "S6" (error voltage) by the Doppler voltage, before it is applied to the VFC "S7", produces a high voltage slew rate and very fast frequency shift "S9" for rapid target selection lock.

When the phase lock loop error voltage "S6" becomes zero it also indicates target-lock condition "BB3". This also causes the steering voltage input to the VFC "S7" to stop changing. At this time, the frequency output is stabilized at 128 times "S9" the Doppler frequency "S2" of the most prominent target and is used as the clock frequency for the SBPFs. The SBPFs have then been tuned to pass the range phase information associated with the closing or opening rate of the selected target "T2, U2". The range channel differential phase information is finally applied to directional Doppler detector 112 "A17, A17A" to extract the target direction "E4" and range to the primary target at the output of phase detector short range 110. The range voltage is 0-5 VDC, with 5 VDC = 1000 feet. The differential phase shift information which may be used to identify additional targets "T1, U1" is attenuated at the output of the SBPFs in the primary target channels "T2, U2". However, the primary target frequency is removed by the notch outputs in the SBPFs "T1, U1", the remaining differential phase information can be treated in a similar way as cited previously to provide range, Doppler rate and relative direction to a second or even higher number of targets. The output frequency of the amplitude detector (Doppler control) channel "S2" is used to detect the opening/closing rate of the target. It is first converted into a proportional steering voltage "S7" and is applied to the phase lock loop VFC converter 538. This voltage has two components. The primary one is the error voltage obtained from the phase comparator "S6", which produces a positive output voltage for inputs that have a higher frequency "S2". The second component of the steering voltage "S7" is obtained from the Doppler control channel frequency "S2". The frequency in this channel, which corresponds to the closing rate of the target, is converted to a proportional Doppler voltage "S4". This is added to the existing steering voltage "S6" so that lower closing rates will cause the PLL to slew to the frequency of the target as fast as the higher closing rates would.

As a target is acquired, the output error voltage from the phase lock loop 526 falls to zero "S6", leaving only the voltage "S4" to set the PLL phase-coherent frequency lock "S9". In the process, the output of the Doppler channel "S1" becomes a square wave "S2" with a repetition rate proportional to the closing rate. This square wave triggers a one shot multivibrator 530 to produce a variable duty-cycle width pulse train "S3" which is then integrated into a DC voltage "S4".

The amplitude of the DC voltage "S4" is dependent on how long the pulses are allowed to discharge the integrator 536 before another impulse charges it, i.e., the pulse recurrence frequency. On slow moving targets, the DC voltage is much lower than on fast moving ones. The DC voltage varies linearly from 0 to 5 volts "S4" and is proportional to the relative velocity of the target up to 200 mph.

The remainder of the circuits of Patent No. 4,673,937 function as explained in the patent.

Further Example of the Invention

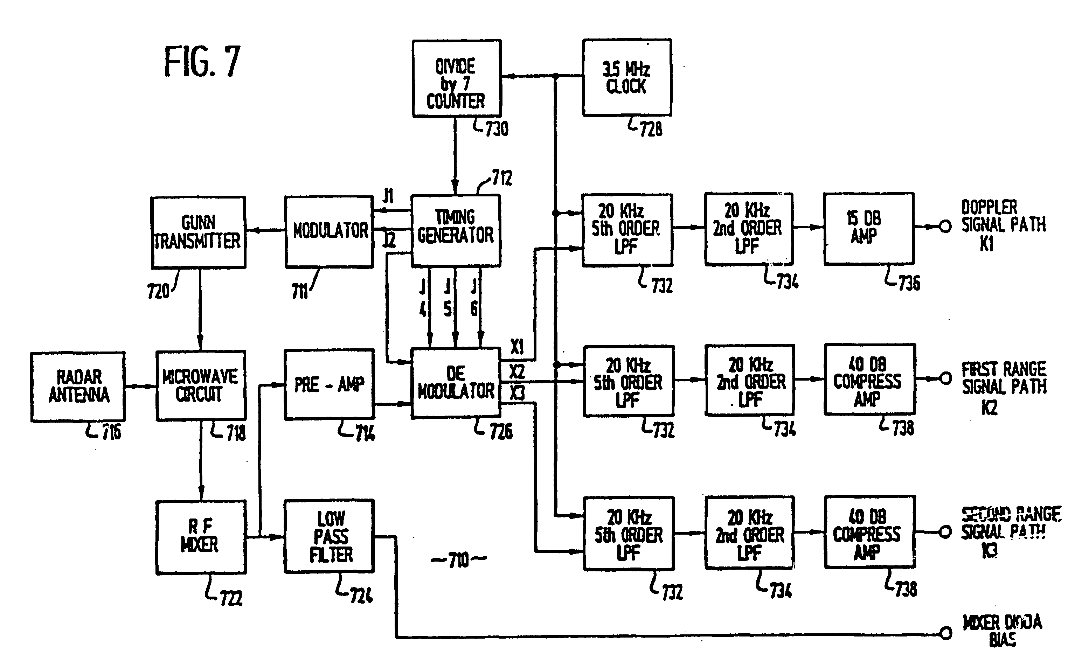

A further example of a radar system which utilizes the waveforms of FIGURE 6 includes a front-end circuit 710 shown in FIGURE 7. As described hereafter in connection with FIGURES 7-11, such circuits respond to received signals at the three different frequencies to determine desired information, including closing rate and range. In addition, the circuitry of such system divides each transmit frame and each receive frame into a plurality of different time interval windows, as shown in FIGURE 6. Only certain ones of the plurality of windows are utilized in connection with the receipt of the transmitted radar signals at the three different frequencies. Conse quently, the remaining windows comprising time space which would otherwise be wasted can be utilized to perform other functions, such as those performed by subsystems in conjunction with the radar system.

As shown in FIGURE 6, a transmit frame 610 and a corresponding receive frame 612 are each 18 μs in length in the present example. Consequently, a succession of 55,555 such frames occurs during each second. The transmit frame 610 and the receive frame 612 are divided into nine windows 614 comprising time intervals of equal length. Consequently, each window 614 is 2 μs in duration. If the transmit frame 610 and the receive frame 612 are related to the distance traveled by the transmitted radar signals with reference to the time scale thereof, then each of the transmit and receive frames 610 and 612 corresponds to 9,000' extending from the transmitter, and each of the windows 614 corresponds to a distance of 1,000 feet.

In the illustrated embodiment, the transmit frame 610 comprises three different frequency intervals 616, 618 and 620. A continuously generated radar signal is transmitted at each of the three different frequencies during the frequency intervals 616, 618 and 620. This is accomplished by frequency switching on a time division basis, using a reference frequency of 24.125 GHz.

A first frequency which is a fixed amount of 0.000125 GHz less than the reference frequency, or 24.124875 GHz, is used during the first frequency interval 616. As shown in FIGURE 6, the first frequency interval 616 encompasses the first three of nine of the windows 614 which extend along the transmit frame 610 and the receive frame 612. The second and third frequency intervals 618 and 620 encompass the fourth through the sixth and the seventh through the ninth ones of the windows 614, respectively.

Radar signals transmitted at the first frequency and reflected back or echoed by the target are detected within a receive interval R1 within the receive frame 612 as shown in FIGURE 6. The interval R1 which commences at the beginning of the second window 614 is shorter than the second window, and has a length which translates into a ground distance of 420'. Because the first frequency is received during the interval R1 which occurs within the second one of the windows 614, the first and third ones of the windows 614 within the first frequency interval 616 are freed for use by other systems.

The second frequency is transmitted during the second frequency interval 618 which encompasses the fourth through the sixth ones of the windows 614. The second frequency is determined by adding the fixed amount of 0.000125 GHz to the reference frequency of 24.125 GHz. Accordingly, the second frequency is at 24.125125 GHz.

The second frequency is detected during a receive interval R2 which commences at the beginning of the fifth window 614. Like the interval R1, the interval R2 has a duration considerably shorter than that of the fifth window and corresponding to 420' of ground distance. The actual time length of the intervals R1 and R2 is 0.86 μs. By receiving the second frequency within the fifth window, the fourth and sixth windows 614 are freed for other uses.

The third frequency, which is the reference frequency of 24.125 GHz, is transmitted during the third frequency interval 620, comprising the seventh, eighth and ninth windows 614. The third or reference frequency is detected within a Doppler channel (DC) receive interval which commences at the beginning of the seventh window. As in the case of the intervals R1 and R2, the interval DC has a time duration of 0.86 μs, corresponding to a ground distance of 420'. Because the third frequency is received within the seventh window, the eighth and ninth windows 614 are freed for other uses.

The front-end circuit 710 shown in FIGURE 7 is employed to transmit and receive radar signals at the three different frequencies and to define the transmit and receive frames 610 and 612 shown in FIGURE 6. Among other things, the front-end circuit 710 functions to pre-amplify the target echo signals received back from the target, to phase shift sample the de-modulated target echo signals, to modulate the transmitter output frequency, to select the demodulator/receiver channel, and to amplitude discriminate the target echo signals.

A modulator 711 which provides signals defining the radar transmission is controlled by a timing generator 712. The timing generator 712 digitally controls the modulator 711 through reference frequency modulation signals J1 and J2, by frequency shift keying the modulator 711 and by synchronous and sequential switching of the received echo signals J3, J4, J5 and J6 into each of three different receiver/demodulation channels K1, K2 and K3. The timing generator 712 functions to define the transmit and receive frames 610 and 612 of FIGURE 6, as described hereafter.

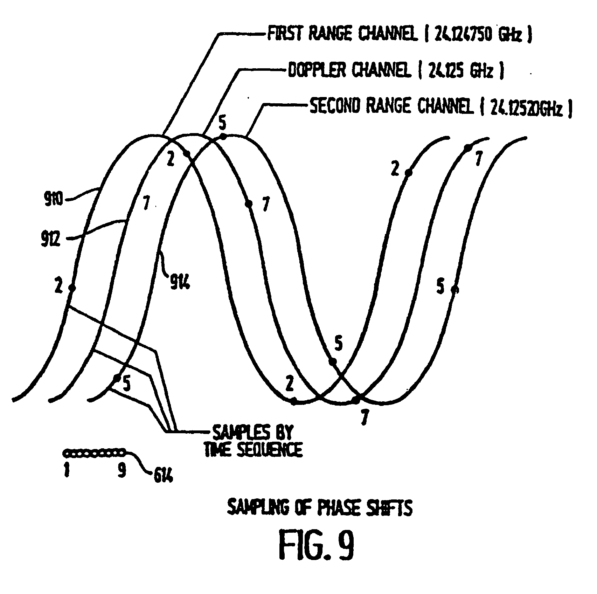

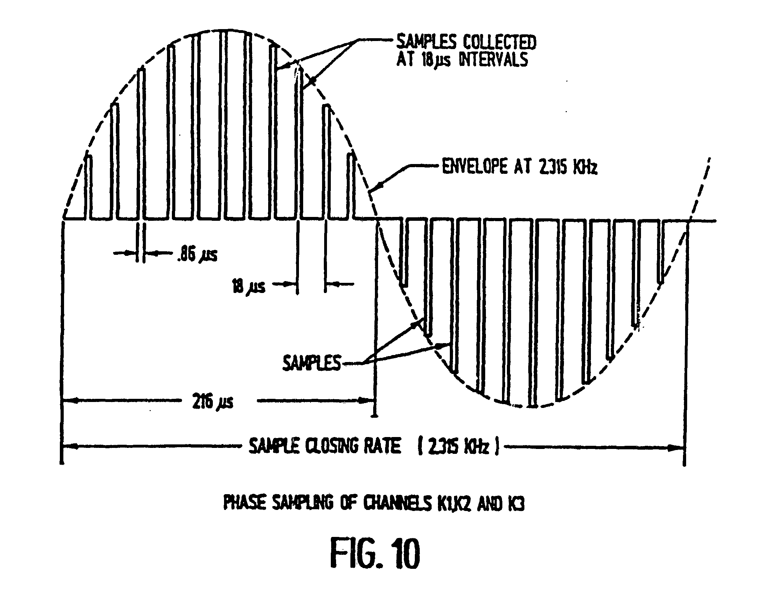

The front-end circuit 710 also includes a pre-amplifier 714 and low pass filters for the signal paths K1, K2 and K3 which integrate the short sampling output pulses in each channel (see FIGURE 10) into continuous sine waves for all targets within the beam width of a radar antenna 716 (see FIGURE 9). The radar antenna 716 is associated with microwave circuits 718 which are coupled to receive transmission signals from a radar transmitter in the form of a Gunn diode transmitter 720, coupled to a modulator 711. The signals received by the radar antenna 716 are reflected back from a target are coupled by the microwave circuits 718 through an RF mixer 722 to the pre-amplifier 714 and to a low pass filter 724 to provide a mixer diode bias. The pre-amplifier 714 is coupled to the three receiver demodulation signal paths (more broadly, signal paths) K1, K2 and K3 through a demodulator 726 which is controlled by the timing signals J3-J6 from the timing generator 712. The timing generator 712 is supplied by a 3.5 MHz clock 728 through a divide by seven counter 730. The 3.5 MHz clock 728 also feeds a 20 KHz fifth order low pass filter (LPF) 732 within each of the receiver demodulation signal paths K1-K3.

The Gunn transmitter 720, which is of the continuous wave (CW) diode type, has its frequency changed in a specific sequence of three frequency shift keying intervals within each transmit frame 610 shown in FIGURE 6. As shown in FIGURE 6, the sequence is comprised of the first frequency of 24.124875 GHz during the first frequency interval 616, followed by the second frequency of 24.125125 GHz during the second frequency interval 618, and then the reference frequency of 24.125 GHz during the third frequency interval 620. The echo signals received from the target by the radar antenna 716 and provided by the microwave circuits 718 to the RF mixer 722 are combined in the same sequence J1-J6 as the transmitter frequencies are shifted, to distinguish the phase change at each of the three frequencies transmitted and received within a frame. The difference in phase shift between the first range signal path K2 and the second range signal path K3 is an indication of the distance or range to the target. The rate of phase shift (frequency) in the signal path K1 which comprises a Doppler control signal path is an indication of the opening or closing rate of the target. The Doppler frequency is in the audio frequency spectrum of approximately 20 Hz - 14.4 KHz.

In addition to the 20 KHz 5th order low pass filter 732, the Doppler signal path K1 also includes a 20 KHz 2nd order low pass filter 734, as do the first and second range signal paths K2 and K3. The output of the 20 KHz 2nd order low pass filter 734 within the Doppler signal path K1 is coupled through a 15 db amplifier 736. The 20 KHz 2nd order low pass filters 734 within the first and second range signal paths K2 and K3 are coupled through a 40 db compression amplifier 738.

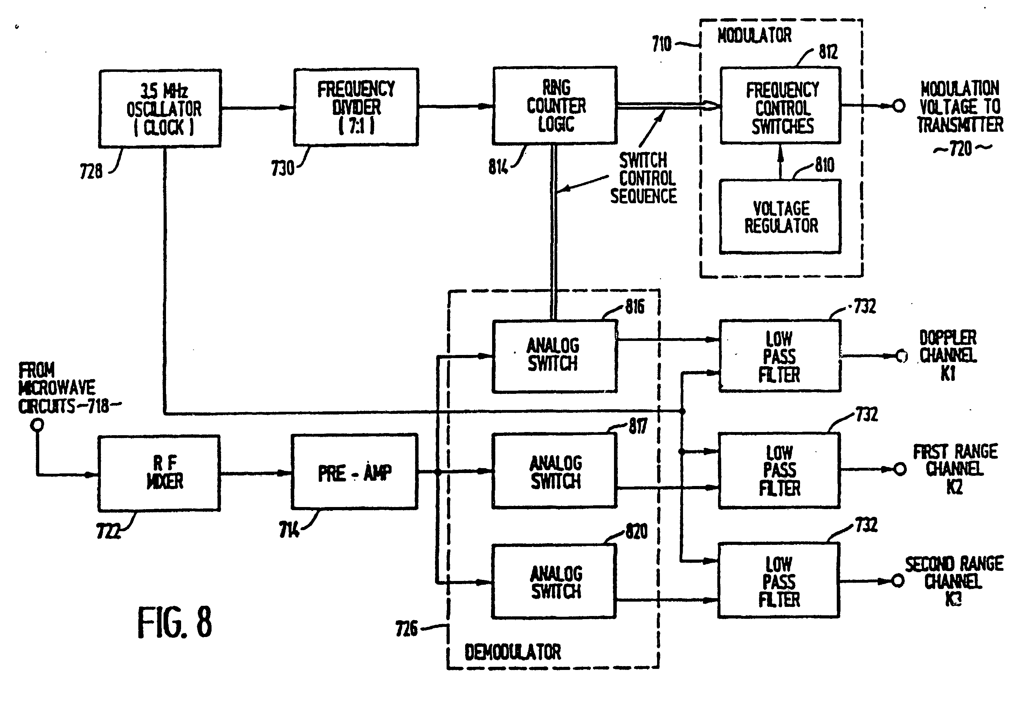

FIGURE 8 is a somewhat more detailed showing of a portion of the front-end circuit 710 of FIGURE 7. As described in connection with FIGURE 7, the Gunn transmitter 720 provides the three frequencies of the transmit frame 610 in response to the modulator 711. The modulator 711 is shown in FIGURE 8 as comprising a voltage regulator 810 and frequency control switches 812. The timing generator 712 of FIGURE 7 comprises a ring counter logic circuit 814 which is coupled to provide timing control signals to the switches 812 as well as to the demodulator 726. The ring counter logic 814 is also coupled to the divide by seven counter 730 which, as noted in connection with FIGURE 7, is coupled to the 3.5 MHz clock 728. As shown in FIGURE 8, the 3.5 MHz clock 728 comprises a 3.5 MHz oscillator, and the divide by seven counter 730 comprises a 7:1 frequency divider.

The voltage regulator 810 shown in FIGURE 8, and which has a stable +5.0 volt output, is coupled to the diode of the Gunn transmitter 720. The Gunn diode of the Gunn transmitter 720 functions as the transmitter oscillator, and its frequency is dependent on the voltage applied thereto. To control the frequency provided by the Gunn transmitter 720, the current into the Gunn diode, which is typically 145 ma, is sequentially increased under control of the timing signals J1 and J2 shown in FIGURE 7. As the current is increased, the resulting voltage drop changes the frequency of the Gunn transmitter 720 accordingly.

A portion of the circuit of FIGURE 8 functions as a phase shift sampling circuit, to route samples of the received target echo signals to the Doppler signal path K1, the first range signal path K2 and the second range signal path K3. This routing occurs during a portion of the time when the Gunn transmitter 720 is transmitting the frequency intended for one of the signal paths K1, K2 and K3. The ring counter logic 814 controls the voltage applied to the diode of the Gunn transmitter 720, and thereby the frequency produced by the transmitter 720. The frequency divider 730 divides the 3.5 MHz frequency of the oscillator 728 by seven to provide a frequency of 500 KHz which is applied to the ring counter 814. This produces a positive output pulse sequentially at each of nine output pins of the ring counter 814. Three of the outputs are ORed together to provide the signal J2, and three other outputs are ORed together to provide the signal J1. Additional logic circuits within the ring logic counter logic 814 provide the remaining timing gate signals J3-J6 as described in connection with FIGURE 7. The timing gate signals J3-J6 control analog switches 816, 818 and 820 within the demodulator 726, thereby routing the target echo signals to the appropriate signal path K1, K2 or K3.

Because the ring counter logic 814 is controlling the frequency shifts of the Gunn transmitter 720, it simultaneously generates the three sequential enable gates J4, J5 and J6, which are 0.86 μs in duration and which correspond to the receive intervals R1, R2 and DC, respectively, in the receiver frame 612 shown in FIGURE 6. Generation of the enable gates J4, J5 and J6 is delayed following the switching of the frequency of the Gunn transmitter 720 at the beginning of the respective windows 614 therefor long enough so that any frequency transients which result from the frequency change of the Gunn transmitter 720 do not interfere with accurate reception of the relatively weak target reflection or echo signals. When one of the enable gates J4, J5 and J6 is present, the output of the pre-amplifier 714 is coupled by a corresponding one of the analog switches, 816, 818 and 820 to the associated one of the low pass filters 732.

FIGURE 9 illustrates the manner in which the phase shifts may be sampled using the three different frequencies of the transmitted and received signals. A first curve 910 corresponds to the first frequency (24.124875 GHz) which is used in conjunction with the first range signal path K2. A second curve 912 corresponds to the reference frequency (24.125 GHz) of the Doppler signal path K1. A third curve 914 corresponds to the second frequency (24.125125 GHz) of the second range signal path K3. The curves 910, 912 and 914 are referenced to time, with the nine windows 614 of one of the 18 μs frames being illustrated along a portion of the horizontal time axis.

When the transmitter frequency is changed, the phase shift of the energy reflected from the target is sampled. Reflected energy during the receive interval R1 at the beginning of the second window is routed to the first range signal path K2. During the receive interval R2 at the beginning of the fifth window, and with the transmitter sending at 24.125125 GHz, received energy is routed to the second range signal path K3. During the receive interval DC at the beginning of the seventh window, with the transmitter at the reference frequency 24.125 GHz, reflected energy is routed to the Doppler signal path K1. The difference in phase shift between the first and second range signal paths K2 and K3 is linearly proportional to the range of the target from the transmitter.

As previously noted in connection with FIGURE 6, the transmit and receive frames 610 and 612 are 18 μs in length. Such frame length therefore has a first target ambiguous range of 9,000' or nearly two miles, and at 9,000' multiples thereafter as the frame is repeated. Use of ranges beyond 9,000' are usually only possible under ideal conditions, such as with ideal road geometry and a very large object oriented centrally in the antenna beam width (such as in the case of a high rise building) and with no other targets in the first 420' in front of the vehicle radar system. The probability of this happening, with only a half milliwatt of power being transmitted, is extremely low.

FIGURE 10 further helps to illustrate the phase sampling of the three different signal paths K1, K2 and K3. FIGURE 10 is a plot with respect to time which illustrates samples collected at 18 μs intervals. An exemplary envelope at 2.315 KHz is shown, corresponding to a closing rate of 2.315 KHz.

As previously noted in connection with FIGURE 7, the first and second range signal paths K2 and K3 include the 40 db compressor amplifiers 738. The amplifiers 738 reduce the dynamic amplitude range between weak and strong target echoes which have a dynamic voltage range of 1 to 10,000 (80 db). The compressor amplifiers 738 reduce the dynamic range to 1-100 (40 db) so as to maintain signal integrity without distortion. Without the compressor amplifiers 738, the system would miss weaker targets or saturate on strong targets. The compressor amplifiers 738 comprise operational amplifiers with feedback loops. A compressor amplifier is not used in the Doppler signal path K1, inasmuch as amplitude differences between targets should not be reduced in that signal path. Such amplitude differences are used to distinguish one target from another.

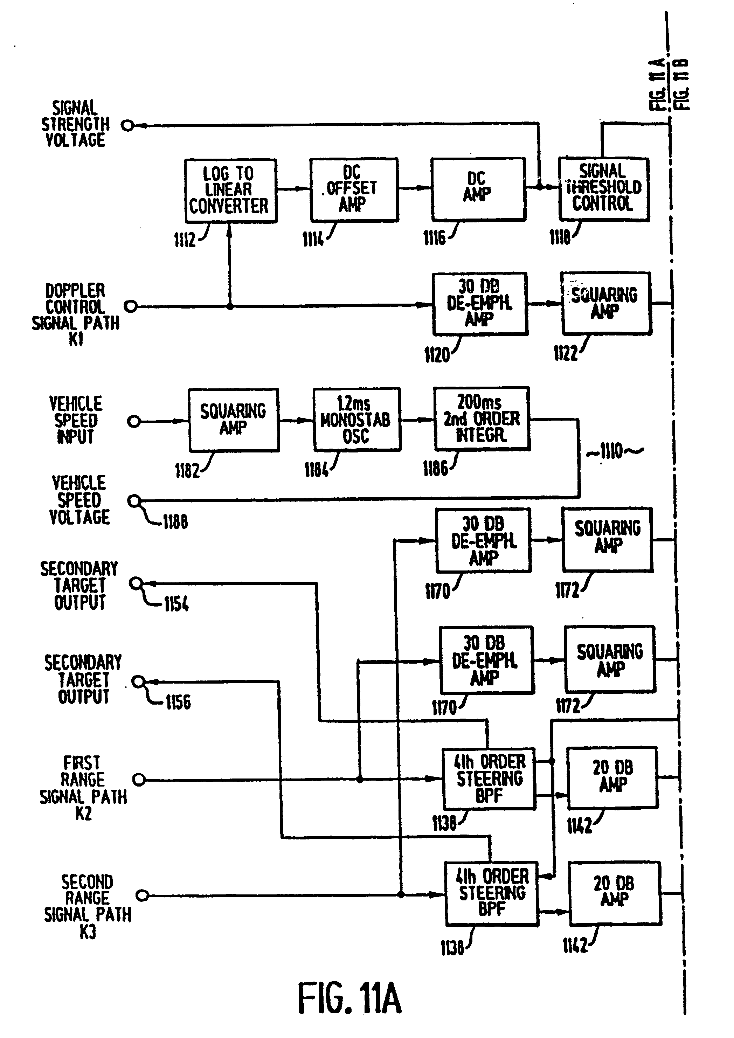

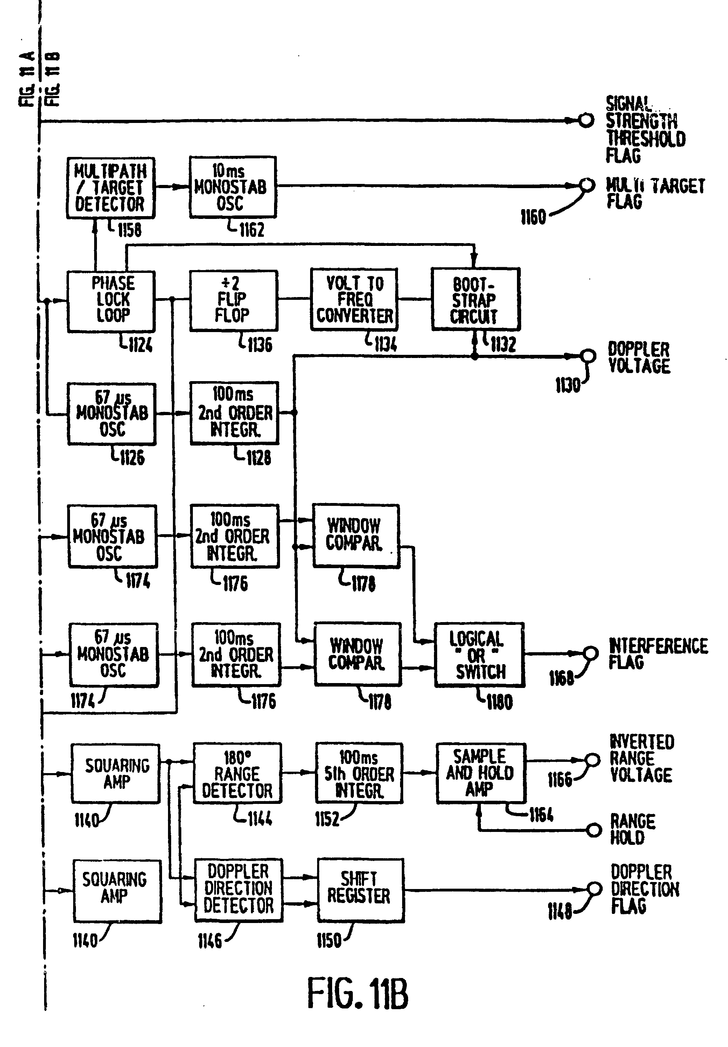

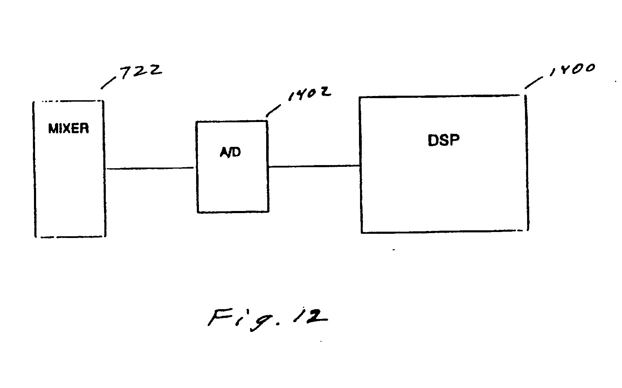

FIGURE 11 shows a signal conditioner circuit 1110 which is used with the front-end circuit 710 of FIGURE 7. The signal conditioner circuit 1110 functions to take the raw signals from the Doppler signal path K1 and the first and second range signal paths K2 and K3 of the front-end circuit 710, along with a signal representing the speed of the vehicle, and process such signals into voltages proportional to range, dosing rate, signal strength and vehicle speed. These voltages, along with several binary flags also generated by the signal conditioner circuit 1110, are then output to a data processor for further processing and evaluation.

The signal conditioner circuit 1110 includes circuitry which measures the relative strength of the reflected or echo radar signals and produces a DC output voltage logarithmically proportional to the strength of such signal. Such circuitry includes a cascade of logarithmic amplifiers forming a log to linear converter 1112, a DC offset amplifier 1114 and a DC amplifier 1116. The logarithmic amplifiers (four) comprising the log to linear converter 1112 provide currents which vary 20 db over a signal amplitude range of 10. The voltage at the output of the converter 1112 therefore varies by a factor of 80db when the signal varies by a factor of 10,000. This voltage is filtered by the DC offset amplifier 1114 and amplified by the DC amplifier 1116 before being applied to a signal threshold control circuit 1118. The DC voltage increases 1 volt/20db of signal increase (4 VDC=80 db). The output of the DC amp 1116 also provides a signal strength voltage which can be used in the data processor described hereafter. The output of the signal threshold control circuit 1118 goes high (logically) whenever the received signal is too weak to process (approximately 8 db above the system noise floor).

The output of the Doppler signal path K1 in the front-end circuit 710 of FIGURE 7 is applied to a Doppler control signal path portion of the signal conditioner circuit 1110, which processes the raw Doppler signal path signal and outputs it as a DC voltage 1130 proportional to the speed difference between the vehicle and the target. The amplitude of the received signal at the reference frequency of the transmitter is determined within the seventh window of each receive frame, as previously described. The Doppler rate of the principal target produces a proportional frequency in both range signal paths K2 and K3 and in the Doppler signal path K1. The range signal paths K2 and K3 provide symmetrical and highly accurate phase shift processing while disregarding amplitude differences. The Doppler signal path K1, on the other hand, disregards phase shift but carefully preserves relative amplitude differences. Such amplitude differences are used to distinguish targets and to tune the radar receiver to a particular target using a steerable phase lock loop.

The signal conditioner circuit 1110 includes a continuation of the Doppler signal path K1. The Doppler signal path K1 includes a 30 db De-emphasis Amplifier 1120 which is coupled through a squaring amplifier 1122 to a phase lock loop 1124 and to a 67 μs monostable oscillator 1126. The oscillator 1126 acts as a frequency to voltage converter preceding a 100 ms 2nd order integrator 1128 which acts as a low pass filter to produce a Doppler voltage at an output terminal 1130 and to a bootstrap circuit 1132. The bootstrap circuit 1132 forms a part of a phase lock loop circuit together with the phase lock loop 1124, a voltage to frequency converter 1134 and a +2 flip flop 1136.

The greater the opening/closing rate of the vehicle onto the target, the higher the Doppler voltage. The Doppler voltage is in the range of 0-5 volts DC, with 5 volts representing an opening/closing rate of 200 mph. The Doppler voltage is added to an output error voltage of the phase lock loop 1124 by the bootstrap circuit 1132, and then applied to the voltage to frequency converter 1134. The output of the voltage to frequency converter 1134, which has a frequency 256 times the Doppler frequency, is applied through a divide-by-2 flip flop 1136 to 4th order steering bandpass filters 1138 within each of the first and second range signal paths K2 and K3. This tunes the reference frequency of the 4th order steering bandpass filters 1138 within a frequency range of 20 Hz to 14.4 KHz to a frequency that is proportional to a closing rate of between about 0.3 mph and 200 mph. The tuned bandpass frequency of the bandpass filters 1138, which is the output frequency of the voltage to frequency converter 1134, is divided by 128 times the clock frequency of the bandpass filters 1138. This frequency is selected and maintained in both range signal paths K2 and K3 when the phase lock loop 1124 has locked onto one of the various frequencies of the differences targets present in the Doppler signal path K1. The various frequencies result from radar echoes from multiple targets, a signal echo returning by multiple paths, and echoes from reflecting objects that are too far away to be targets of interest. The lock frequency of the phase lock loop 1124 is the frequency in the Doppler signal path K1 that has the largest amplitude. This amplitude depends on the strength of the target radar echo which decreases as the distance to the target increases.

In this way, the range signal path phase information which is selected to correspond to the most prominent target in the Doppler signal path K1, is separated from other target phase information by the 4rh order steering bandpass filters 1138 and is provided to squaring amplifiers 1140 via 20 db amplifiers 1142 for further processing. The Doppler signal path K1 provides an amplitude discrimination function by driving the phase lock loop 1124 to recognize the strongest target. All other phase information relating to irrelevant targets is attenuated before entering the conditioning circuit of the first and second range signal paths K2 and K3. This Doppler control scheme thus enables the system to select or isolate a single target to the exclusion of many others.

Within a Doppler frequency span of about 20 Hz - 14.4 KHz (about 0.3 mph to 200 mph), the exact tuning of the 4th order steering bandpass filters 1138 depends on the steering voltage from the bootstrap circuit 1132 to lock the phase lock loop 1124. The voltage produced by the bootstrap circuit 1132 is derived by summing the Doppler voltage at the terminal 1130, and the output error voltage of the phase lock loop 1124. The use of frequency to voltage conversion to increase the sum of the output strapping of the phase lock error voltage by the Doppler voltage before it is applied to the voltage to frequency converter 1134 produces a high voltage slew rate and very fast frequency shift at the output of the divide-by-2 flip flop 1136 for rapid target selection lock.

As a target is acquired, the error voltage from the phase lock loop 1124 reduces to zero to indicate a target-lock. This also causes the steering voltage input to the voltage to frequency converter 1134 to stop changing. The output frequency is stabilized at 128 times the Doppler frequency of the most prominent target, thereby determining the clock frequency for the 4th order steering bandpass filters 1138. The bandpass filters 1138 have been tuned to pass the range phase information associated with the closing or opening rate of the selected target. The range signal path differential phase information is applied to comparators formed by a 180° range detector 1144 and a Doppler direction detector 1146 to extract the relative direction which is indicated at a terminal 1148 at the output of a shift register 1150, and to provide the range via a 100 ms 5th order integrator 1152. The range voltage varies from 0-5 volts DC, with 5 volts representing a range distance of 1000 feet. The differential phase shift information may be used to identify additional targets, such as at terminals 1154 and 1156 through attenuation of the 4th order steering bandpass filters 1138. However, the primary target frequency is removed by notch outputs in the bandpass filters 1138. The remaining differential phase information at the terminals 1154 and 1156 can be treated in a similar way, to provide range and relative direction to a second or even higher number of targets.

Occasionally, the phase lock loop 1124 may not lock. This may be due to such things as the absence of a target or the reception of multiple echoes of a single target (i.e., multipath reflection) which have followed different routes in returning to the vehicles radar system. When this situation occurs, an output of the phase lock loop 1124 is filtered and a DC average produced by a multipath/target detector 1158 is compared to a threshold value, and a multitarget flag signal is provided at a terminal 1160 at the output of a 10 ms monostable oscillator 1162.

Among other things, it is necessary to determine the direction of a target; namely, whether the target is approaching or moving away from the vehicle. Normally, the phase shift in the first range signal path K2 at the output of the squaring amplifier 1140 lags the output of the squaring amplifier 1140 in the second range signal path K3. This is due to the transmitter frequency being lower when the target echo is being sampled in the first range signal path K2 than when it is sampled in the second range signal path K3. The phase-shifted sine waves at the outputs of the 20 db amplifiers 1142 are squared by the squaring amplifiers 1140 and are fed to a D-type flip flop within the Doppler direction detector 1146. The signal at the output of the squaring amplifier 1140 in the first range signal path K2 is used to dock in the signal at the output of the squaring amplifier 1140 within the second range signal path K3 to the D-input of the flip flop. If the signal within the first range signal path K2 lags the signal within the second range signal path K3, the output of the flip flop is set to be high. If not, the output is set to be low. The signal in the first range signal path K2 also clocks the output of the flip flop into a 64 bit shift register comprising the shift register 1150. If the flip flop remains set for 65 successive cycles of the signal in the first range signal path K2, the phase lag condition of the first range signal path K2 relative to the second range signal path K3 propagates through the shift register 1150 to provide the Doppler direction flag at the terminal 1148. If the phase in the second range signal path K3 is the same as or lags the phase of the signal in the range signal path K2, the shift register 1150 is reset to a default target recede condition, indicating that the target is receding or moving away.

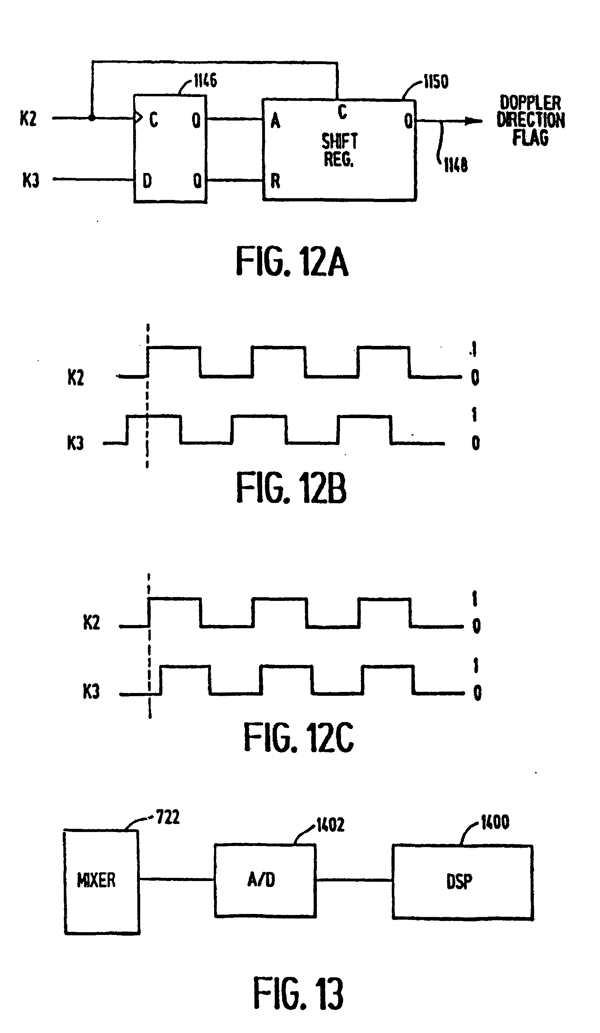

FIGURE 12A is a more detailed schematic drawing of the inventive target persistence and environment filter circuit. In the preferred embodiment, the first range signal path K2 is coupled to the edge-triggered clock input of a D-type bistable latch (or "flip-flop") 1146, while the second range signal path K3 is coupled to the data input of the flip-flop 1146. The Q output of the flip-flop 1146 is coupled to the input of a 64-Bit shift register 1150 (of course, other size shift registers can be used, or preferably a programmable length shift register is used). The $\overline{Q}$ output of the flip-flop 1146 is coupled to a reset input of the shift register 1150. If a logical one is applied to the reset input of the shift register 1150, all data positions in the shift register 1150 are cleared to logical zeros. The shift register 1150 is clocked by the signal on first range signal path K2. A suitable shift register is available from Motorola as part no. MC14557BCP. The output of the shift register 1150 is the Doppler direction flag 1148.

As noted above, in operation, if the signal on the first range signal path K2 lags the signal on the second range signal path K3, the output of the flip-flop 1146 is a logical one. This case is shown in FIGURE 12B, which shows the squared-up sine waves on the first range signal path K2 and second range signal path K3, with the K2 signal lagging the K3 signal in phase. Since the data input to the flip-flop 1146 from signal path K3 is at a logical one when the clock signal on signal path K2 occurs, the output Q of the flip-flop 1146 is set to a logical one.

FIGURE 12C shows the opposite situation, when the signal on the first range signal path K2 leads the signal on the second range signal path K3 in phase. In this case, when the clocking signal from the first range signal path K2 is applied to the flip-flop 1146, the input from the second range signal path K3 is a logical zero. Therefore, the output Q of the flip-flop 1146 will also be a logical zero.

If the first range signal lags the second range signal for 65 cycles (65 representing the delay through the flip-flop 1146 and through the shift register 1150) a logical one will be output from the shift register 1150 as the Doppler direction flag 1148.

If the Doppler direction flag 1148 is a logical one, the flag indicates that an echo signal from a target has persisted long enough that the remainder of the system should be aware of its existence, and that the target indicated by the echo signal is approaching the vehicle.

On the other hand, if at any time the first range signal leads the second range signal, the flip-flop 1146 will be reset, as will the shift register 1150. The Doppler direction flag 1148 will therefore be a logical zero, indicating that the target is receding or moving away from the vehicle.

In the present system, with a reference frequency of 24.125 GHz, the 64 bits of the shift register 1150 represents approximately 16 inches of movement towards a target (the distance will vary with frequency and the selected length of the shift register). Thus, in the illustrated embodiment, a target must persist for at least 16 inches of movement by the vehicle for the echoes from such a target to be recognized as significant. Therefore, briefly encountered objects, such as a bird flying through the radar beam, or wayside objects in the environment (such as objects in the road or objects along side the road) must be "seen" by the radar beam during at least 16 inches of movement before being registered in the rest of this radar system. The present invention is thus quite effective in preventing the radar system from giving false alarms due to brief target echoes resulting from flying birds or wayside objects.

Although a particular preferred circuit has been illustrated for the persistence and environment filter, the invention encompasses any equivalent circuit that (1) determines target direction (approaching or receding) and (2) requires persistence of the "approaching" state of the target direction for a selected duration. Thus, the shift register 1150 could be replaced by a resettable timer circuit and latch, the output of which represents the Doppler direction flag 1148. The timer circuit is triggered by the "approaching" state Q of the target direction flip-flop 1146. If the timer times out, its output sets the latch, and the Doppler direction flag 1148 is a logical one. If a receding signal occurs anytime before the timer times out, the timer and latch are reset and the Doppler direction flag 1148 is a logical zero. If a timer is used, the duration of the timeout period is preferably proportional to the vehicle speed, so that the duration represents the same persistence distance at any speed.

As another implementation of the inventive persistence and environment filter, the determination of target direction and the persistence period can be computed in a digital signal processor or by a microprocessor.

The signal conditioner circuit 1110 includes portions responsive to the first and second range signal paths K2 and K3 of the front-end circuit 710 to provide a DC voltage having a magnitude proportional to the range of the target. This voltage appears at the output of the 100 ms 5th order integrator 1152. The voltage varies from 0-5 volts for a range of 1000 feet, and the variation of the voltage is linear between these values. The phase-shifted square waves at the outputs of the squaring amplifiers 1140 are applied to an exclusive OR gate within the 180° range detector 1144. When the two gate inputs are in phase, the output is zero volts. When they are 180° out of phase, the output is 5 volts. For phase shifts between 0° and 180°, the duration of the positive output pulse from the exclusive OR gate is proportional to the phase difference. Such output pulses are filtered by the 100 ms 5th order integrator 1152 to integrate the pulses, leaving only a DC average voltage level. This voltage is applied to a sample and hold amplifier 1164 which provides the output range signal at a terminal 1166.

The signal conditioner circuit 1110 includes a portion thereof for generating an interference flag at an output terminal 1168 signifying that a foreign radar transmitter frequency is being received by the system at the same time as the authentic target echo. Detection of this condition depends on the fact that interfering signals that appears in one of the range signal paths K2 and K3 or the Doppler signal path K1 will cause a large amplitude unbalance between any two signal paths. To detect this condition, the signals within the first and second range signal paths K2 and K3 are applied to 30 db De-emphasis amplifiers 1170. The signals therefrom are passed through squaring amplifier 1172 and are then subjected to DC level conversion by 67 µs monostable oscillators 1174 and low pass filtering by 100 ms 2nd order integrators 1176. The voltages at the outputs of the integrators 1176 are compared with a DC level from the 100 ms 2nd order integrator 1128 in the Doppler signal path K1. There is a separate window comparator 1178 for each range signal path K2 and K3. The outputs of the window comparators 1178 trigger a logical "OR" switch 1180 if they are greater or less than the Doppler signal path amplitude by 50 milli-volts. This can only occur if one of the range signal paths K2 and K3 or the Doppler signal path K1 is receiving a foreign interfering transmission.

The signal conditioner circuit 1110 includes circuitry for providing a voltage indicating the speed of the vehicle. A signal taken from a tachometer or opto-electronic device is applied via a squaring amplifier 1182 before being converted into a precision 1.2 ms pulse train by a 1.2 ms monostable oscillator 1184, and then integrated into a DC voltage by a 200 ms 2nd order integrator 1186. The voltage at the output of integrator 1186, which varies from 0-5 volts, with 5 volts representing 100 mph, is then applied to a terminal 1188.

The various signals produced by the signal conditioner circuit 1110 may be applied to a data processor for appropriate utilization. The data processor may use information on target range, opening/closing rate, direction, and vehicle speed to provide warnings, and where desired, to accomplish various safety functions. For example, a hazard evaluation algorithm can be executed using such information in conjunction with a hazard level chosen for a particular driver, to provide a warning when danger of a collision is present. Such information can also be used to accomplish emergency measures, such as applying the brakes of the vehicle, modifying the vehicles cruise-control setting, or inflating an air bag.

As noted in connection with FIGURE 6, the receiving intervals R1, R2 and DC within the receive frame 612 as provided by the receiver portion of the front-end circuit 710 are confined to the second, fifth and the seventh windows 614. This frees the remaining windows which include the first, the third, the fourth, the sixth, the eighth and the ninth windows, for other functions. For example, the vehicle radar system may be used in conjunction with a subsystem which utilizes wayside transponders. The available windows within the receive frame 612 allow for the transmission, receipt and other processing of signals in addition to the primary function of transmitting the radar signal at different frequencies and segregation of the received signals into the Doppler signal path K1 and the range signal paths K2 and K3 for determination of range and opening/closing rate. A wayside transponder system is but one example, and still other arrangements can be incorporated which utilize the available windows.

Although the illustrated embodiment uses three distinct frequencies and three corresponding signal paths K1, K2, and K3 to generate the range and closing rate (positive and negative) information used in the inventive system, alternative embodiments are encompassed within the scope of the present invention. Thus, for example, only two frequencies could be used to generate both the Doppler (opening/closing rate) and range information. Thus, for example, referring to FIGURE 7, rather than sending a first frequency X1 through the Doppler signal path K1, a second frequency X2 through the first range signal path K2, and a third frequency X3 through the second range signal path K3, either of the two frequencies used for generating the range information can also be shunted into the Doppler signal path K1 to determine the Doppler frequency (opening/closing rate).

Referring to FIGURE 6, in such an embodiment, instead of having three intervals 616, 618, and 620 within one frame, only two intervals need be used, which may be either symmetric (i.e, having the same time-width), or non-symmetric. As an example, one frequency at 24.125125 GHz can be transmitted in a first time interval, and a second frequency at 24.125 GHz could be transmitted during a second interval, the two intervals comprising one transmit frame 610. Correspondingly, the receive frame 612 would also comprise two matching intervals. The signal received during the first interval of the receive frame 612 could, for example, be coupled into the first range signal path K2 from the demodulator 726. The signal received during the second interval of the receive frame 612 would be coupled through the demodulator 726 into the second range signal path K3 and into the Doppler signal path K1.

In this alternative two frequency embodiment, it may be necessary to amplify the received signal that is coupled to both the Doppler signal path K1 and one of the range signal paths K2, K3 in order to approximate the strength of the received signal being passed to the other range signal path. This may be done by a conventional amplifier placed before the low pass filter 732, or by adjusting the amount of compression of the compression amplifier 738.

Further, the windows can be longer in duration if only two frequencies are used. For, example, if two frequencies are used, with three windows per interval, the window duration would be 3 μs if the 18 μs frame length is retained and the windows are equal duration. If only two windows are used per interval, the window duration would be 4.5 μs if the 18 μs frame length is retained and the windows are equal duration. However, other combinations of durations and total duration can be used.

FIGURE 12 shows another embodiment of the present invention, in which the analog circuitry for generating Doppler frequency (opening/closing rate) and range information is replaced by a digital signal processor 1400 coupled to the output of an analog to digital (A/D) converter 1402, which receives the output of the RF mixer 722 shown in FIGURE 7. A suitable digital signal processor (DSP) is the model DSP56001 from Motorola Corporation. The DSP 1400 receives digitized signals from the RF mixer 722 during at least two distinct time intervals corresponding to the transmission of at least a first frequency and a second, different frequency. The DSP 1400 is programmed to determine from this information the Doppler frequency (opening/closing rate) for the target, target range, and target direction. Techniques and algorithms for programming a DSP to generate this basic information from such inputs is well known in the art.

In the configuration shown in FIGURE 12, there may be only one physical signal path, but the time-multiplexing of at least two transmitted signals through the DSP 1400 can be considered to comprised at least two logical signal paths.

Thus, the various embodiments of the present invention use at least two radar frequencies, each being transmitted within at least one window of a plurality of windows defining an interval, the intervals for the at least two frequencies defining a transmit frame, the reflected signals being received in corresponding windows of corresponding intervals of a receive frame. From the received signals, Doppler frequency (opening/closing rate), target range, and target direction can be determined by either analog, digital, or combined analog/digital circuitry. By using the concepts of windows as subportions of the intervals defining transmit and receive frames, the remaining windows in the transmit and receive frames are free for use for auxiliary functions.

Spectrum Conditioning

Another aspect of the present invention, which may be used with or without the multi-window feature described above, is a conditioning circuit for the audio-frequency spectrum of Doppler echo signals received from targets. Such signals are selectively conditioned or de-emphasized such that the echo signals from rain and/or strongly reflecting wayside targets (e.g., overpasses, signs, etc.) are attenuated, and thus taken into lesser consideration by the processing circuitry of the automotive collision avoidance radar system in determining the presence of a potential roadway hazard.

FIGURE 13 is a diagram showing the amount of attenuation of target echo signals as a function of received Doppler frequency, for "normal" conditioning, provided by one embodiment of the present invention (de-emphasis circuit 1120 shown in FIGURE 11). The diagram shows the audio-frequency Doppler spectrum from about 20 Hz to a cut-off frequency of about 14.4 KHz. The dynamic range of received signals ranges from a noise threshold of about 8 db to typically about 62 db (72 db maximum). Higher received Doppler frequencies mean that the reflecting target is at a higher speed relative to the radar-bearing signal. The low end of the spectrum, 20 Hz, equals about 0.3 mph; the high end of the spectrum, 14.4 KHz, equals about 200 mph. Frequencies above 14.4 KHz are rapidly attenuated at a rate of about 12 db/octave due to the low-pass fitter 720 (FIGURE 8) in-line with the deemphasis circuit 1120. Strongly-reflecting (either because of large size, close distance, and/or good reflection characteristics) targets generate a larger echo signal amplitude than do weakly-reflecting targets.

As FIGURE 13 shows, in the "normal" conditioning mode, none of the Doppler signal spectrum is attenuated. Consequently, all received target signals are equally weighted by subsequent processing circuitry. This mode is particularly suited for driving conditions without rain, and at lower traffic speeds or where traffic flow is relatively uncongested. In such conditions, all target signals, representing all target sizes, are considered to be equally pertinent to determining a hazard level.

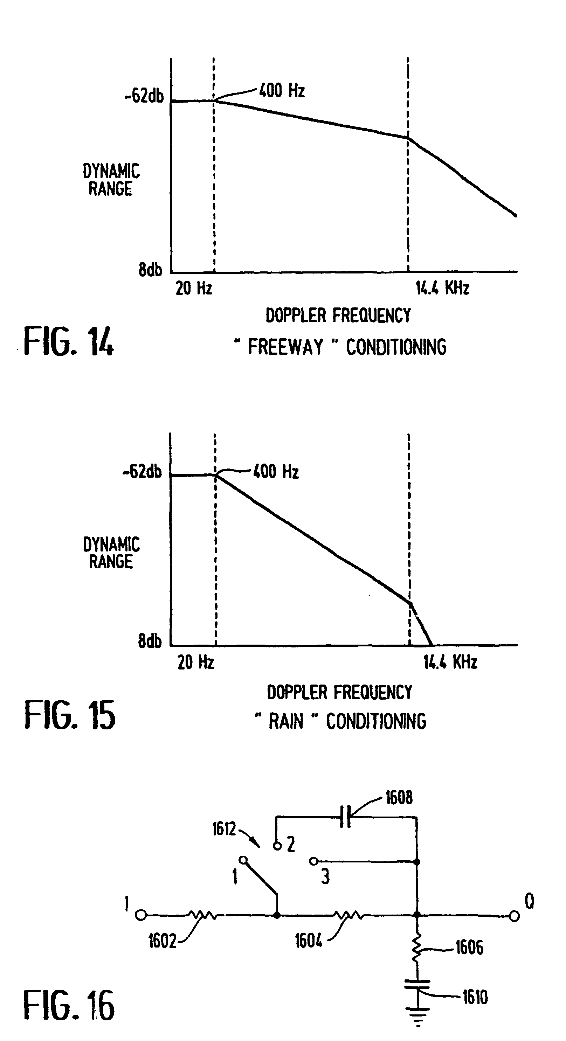

FIGURE 14 is a diagram showing the amount of attenuation of target echo signals as a function of received Doppler frequency, showing a first level of conditioning ("freeway" conditioning) for one embodiment of the present invention. A low-pass filter provides about 1.5 db/octave of attenuation starting at about 400 Hz (equivalent to about 6 mph). The total attenuation is additive, so at the 14.4 KHz cut-off point, the attenuation rate is about 13.5 db/octave.

In freeway-type traveling conditions, the radar-bearing vehicle is traveling at typical speeds of 50 to 70 mph. In such conditions, the radar system is likely to receive multiple high-frequency return signals from large stationary objects (e.g., overpasses, signs, etc.), whereas the echo signal from another vehicle going in the same direction that suddenly becomes a hazard (e.g., due to a sudden lane change or braking) typically has a lower frequency (due to lower relative speed). Without attenuation of the higher frequency signals, the radar system may lock onto a strong high frequency echo from a non-hazardous target and effectively mask out a weaker lower frequency signal from a hazardous target. Attenuating the higher frequency signals in such conditions in effect makes such targets appear "smaller", and thus less hazardous.

FIGURE 15 is a diagram showing the amount of attenuation of target echo signals as a function of received Doppler frequency, showing a second level of conditioning ("rain" conditioning) for one embodiment of the present invention. A low-pass filter provides about 6 db/octave of attenuation starting at about 400 Hz. The attenuation at the 14.4 KHz cut-off point is about 18 db/octave.

In moderate to heavy rain conditions, the radar signal echoes off of the rain drops appears as a substantial amount of noise above about 400 Hz. In order to reduce the level of echo signals more likely to be generated by rain reflections than hazardous targets, the frequency spectrum is more sharply deemphasized at higher frequencies. Since vehicle speed is more likely to be reduced in such driving conditions, such deemphasis does not significantly increase the likelihood that a high frequency (i.e., high relative velocity) hazardous target will be disregarded by the radar system.

FIGURE 16 is a schematic diagram of an analog version of one embodiment of the present invention, suitable for providing the deemphasis modes diagrammed in FIGURES 13-15. A first 1602, second 1604, and third 1606 resistor, and a first 1608 and second 1610 capacitor, configured as shown, provide a low pass filter. An input signal K1 is provided to input I (FIGURE 11), and the output of the deemphasis circuit is provided at Q.

A 3-way switch 1612 provides a user-selectable means for switching between the normal mode, the freeway mode, and the rain mode. When the switch 1612 is in position 1, corresponding to the rain mode, the circuit provides the greatest rate of low-pass filtering. When the switch 1612 is in position 2, corresponding to the freeway mode, capacitor 1608 is coupled in parallel to resistor 1604, and the circuit provides a lower rate of low-pass filtering. When the switch 1612 is in position 3, corresponding to the normal mode, resistor 1604 is shunted out of the circuit, and the circuit provides essentially no low-pass filtering.

With the following component values, the illustrated embodiment has a transition frequency at about 400 Hz:

| Resistor 1602 | 3K ohms |
|---|---|
| Resistor 1604 | 51.1K ohms |
| Resistor 1606 | 2K ohms |
| Capacitor 1608 | .0033 pf |
| Capacitor 1610 | .0047 pf |

Of course, other transition points and component values could be chosen, and other circuits implemented, both in analog circuitry as well as in digital circuitry, to provide a similar deemphasis function.

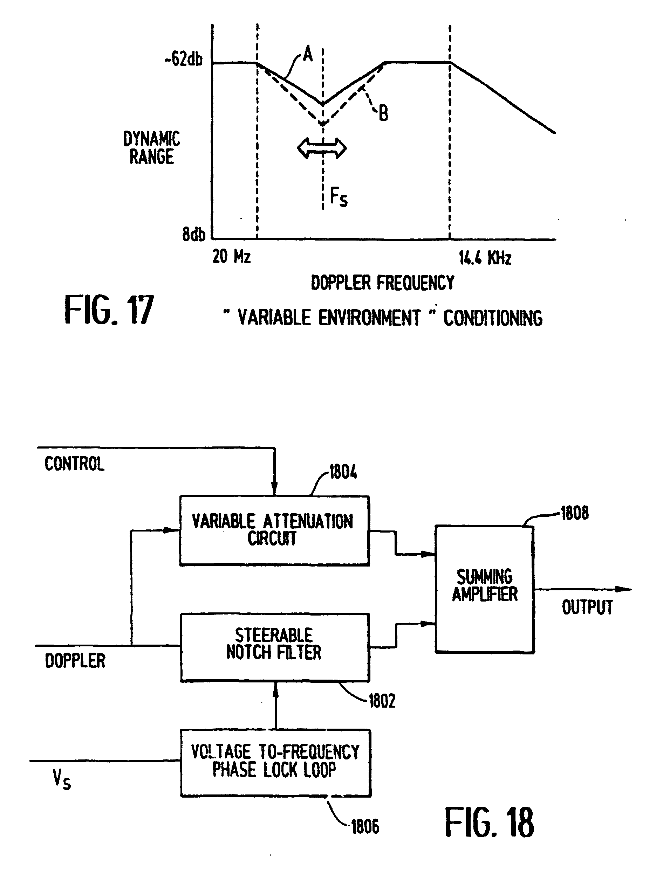

FIGURE 17 is a diagram showing the amount of attenuation of target echo signals as a function of received Doppler frequency, showing "variable environment" conditioning, for one embodiment of the present invention. Selected Doppler frequencies are attenuated using a notch-type filter. In the preferred embodiment of this version of the invention, the amount of attenuation is selectable between at least two levels, A and B. Further, the notch filter used to implement the attenuation function shown in FIGURE 17 is "steerable", so that the greatest amount of attenuation occurs at a frequency $F_s$ that corresponds to the vehicle speed $V_s$. By providing greater deemphasis for target echo signals from targets having a speed near the speed of the user's vehicle, stationary targets (e.g., freeway overpasses and roadside signs), which have a relative speed with respect to a radar-bearing vehicle equal to the vehicle's speed, are given a lesser weight in further processing of the radar echo signals. This contrasts with the lack of attenuation given to reflected signals from objects that have a relative speed significantly less than or greater than the speed of the vehicle. For example, if a radar bearing vehicle is travelling at approximately 50 mph, and is rapidly approaching a much slower vehicle going approximately 20 mph, the relative speed difference between the two vehicles is 30 mph. Target signals from the slower vehicle would therefore not be attenuated as much as echo signals from, for example, roadside signs, which would appear to be travelling at 50 mph relative to the radar-bearing vehicle.

FIGURE 18 is a block diagram of a circuit for implementing the "variable environment" conditioning function shown in FIGURE 17, in accordance with the present invention. The incoming Doppler signal is applied to the input of a steerable notch filter 1802 (known in the art), and to an input of a variable attenuation circuit 1804. A control signal is also applied to the variable attenuation circuit 1804. The speed of the vehicle, $V_s$ is applied to the input of a voltage-to-frequency phase lock loop 1806.

The variable attenuator 1804 selectably provides for at least a first level A and a second level B of attenuation. The variable attenuator 1804 selectably provides for at least a first level A and a second level B of attenuation. For example, during moderate to heavy raining, it may be desirable to have a greater degree of attenuation (level B). The control signal can be provided by, for example, a user-selectable switch. Alternatively, the control signal may be generated in an automated fashion, such as by detecting the activation of a vehicle's windshield wipers (indicating the presence of rain), or by detecting an average noise level from radar echo signals indicative of the presence of moderate to heavy rain.

The voltage-to-frequency phase lock loop 1806 converts an input signal $V_s$ indicative of the vehicle speed to a steering frequency for the steerable notch filter 1802, in known fashion. In response to the steering frequency, the steerable notch filter 1802 creates a "notch" of signal attenuation for incoming Doppler frequencies, the notch being centered around a frequency $F_s$ that corresponds to the vehicle speed $V_s$. The output of the steerable notch filter 1802 and of the variable attenuation circuit 1804 are applied to a summing amplifier 1808 that produces an output of the type shown in FIGURE 17 (i.e., attenuation at level A or at level B, with a center frequency of $F_s$ equivalent to the speed of the vehicle).

**Claims**

1. A vehicle radar system comprising:

a. means (718,720,711,712) for successively transmitting a radar signal at a plurality of different frequencies, and operative to continuously transmit the radar signal through a succession of transmit time frames (610), each of which comprises at least (1) a first portion (620) during which the radar signal is transmitted at a reference frequency, and (2) a second portion (616,618) during which the radar signal is transmitted at a frequency different from the reference frequency, each such portion (616,618,620) being further divided into a plurality of transmit time interval windows (614);

b. means (714,718,722,726) for receiving the transmitted radar signals at the plurality of different frequencies as reflected back to the radar system by a target, and operative to receive the reflected radar signals during receive time interval windows (614), each such receive time interval window (614) corresponding to a transmit time interval window (614) of the transmit time frames (610) of the means for successively transmitting;

c. means (K1), coupled to the means (714,718,722,726) for receiving, responsive to the rate of phase shift in a received signal received during a selected one of the receive time interval windows, for determining opening or closing rate of the target reflecting back the radar signals;

d. means (K2,K3), coupled to the means (714,718,722,726) for receiving, responsive to phase shift differences between signals received during a first selected time interval window (614) associated with a first transmit frequency and a second selected time interval window (614) associated with a second transmit frequency, for determining range of the target reflecting back the radar signals; and

e. means, coupled to the means (714,718,722,726) for receiving and the means (718,720,711,712) for successively transmitting, for identifying transmit and receive time interval windows (614) which are not utilized in connection with receipt of transmitted radar signals;

whereby each receive time interval window (614) which is not utilized in connection with receipt of transmitted radar signals is available to perform functions other than determining opening or closing rate of the target reflecting back the radar signals, and determining range of the target reflecting back the radar signals.

2. The vehicle radar system of claim 1, wherein the means (718,720,711,712) for successively transmitting is operative to continuously transmit a radar signal through a succession of time frames (610), each of which comprises (1) a first portion (614) during which the radar signal is transmitted at a reference frequency, (2) a second portion (618) during which the radar signal is transmitted at a first frequency above the reference frequency, and (3) a third portion (616) during which the radar signal is transmitted at a second frequency below the reference frequency.

3. The vehicle radar system of claim 1, wherein each time interval window may vary from approximately 2 μs to approximately 4.5 μs in duration.

4. A vehicle radar system comprising the combination of:

a. means (718,720,711,712) for successively transmitting radar signals at three different frequencies, through a succession of time frames (610), each such time frame (610) comprising a transmit frequency interval (616,618,620) during which a corresponding one of the three different frequencies is transmitted, each such transmit frequency interval (616,618,620) being divided into a plurality of transmit time interval windows (614);

b. means (714,718,722,726) for receiving the transmitted radar signals at the three different frequencies as reflected back to the radar system by a target, the received signal comprising receive frequency intervals (616,618, 620), each corresponding to a unique transmit frequency interval (616,618,620), and being divided into a plurality of receive time interval windows (614), each such receive time interval window (614) corresponding to a unique one of the transmit time interval windows (614);

c. means for separating the received radar signals into three different signal paths according to the three different frequencies thereof, such that each signal path is associated with particular receive time interval windows (614);

d. means responsive to the rate of phase shift of signals in a first one of the three different signal paths during a predetermined receive time interval window associated with the first signal path for determining closing rate of the target reflecting back the radar signals;

e. means responsive to phase shift differences between signals in the second and third ones of the three different signal paths during a predetermined receive time interval window associated with the second signal path and a predetermined time interval window associated with the third signal path for determining range of the target reflecting back the radar signals; and

f. means, coupled to the means for receiving and the means (718,720,711,712) for successively transmitting, for identifying transmit and receive time interval windows which are not utilized in connection with receipt of transmitted radar signals;

whereby each receive time interval window which is not utilized in connection with receipt of transmitted radar signals is available to perform functions other than determining closing rate of the target reflecting back the radar signals, and determining range of the target reflecting back the radar signals.

5. The vehicle radar system of claim 4, wherein a first of the three different frequencies is below a reference frequency, a second of the three different frequencies is above the reference frequency, and a third of the three different frequencies is at the reference frequency.

6. A vehicle radar system comprising the combination of:

a. a transmitter (718, 720, 711, 712) for continuously transmitting a radar signal at a succession of different frequencies and including a timing generator for providing timing signals defining intervals for the different frequencies and defining a plurality of transmit time interval windows (614) within each frequency interval, a modulator responsive to the timing signals for providing signals denoting desired frequencies, and a transmitter output for transmitting radar signals at frequencies determined by the signals from the modulator; and

b. a receiver (714,718,722,726) for receiving the transmitted radar signals reflected back to the radar system by a target, and including a plurality of signal paths, a plurality of processing devices coupled to the plurality of signal paths, and a demodulator responsive to the timing signals provided by the timing generator for routing received radar signals to selected ones of the processing devices during a first set of predetermined time interval windows (614) to determine range and closing and opening rate, and routing received radar signals to selected other processing devices during a second set of predetermined time interval windows (614) to perform functions unrelated to determining range and rate of closing and opening.

7. The vehicle radar system of claim 4, wherein the modulator comprises a voltage regulator and a plurality of frequency control switches coupled to the voltage regulator and operative to provide voltages denoting desired frequencies to the transmitter (718,720,711,712) in response to timing signals from the ring counter logic circuit.

8. The vehicle radar system of claim 4, wherein the demodulator (726) comprises a plurality of analog switches (816..820), each being coupled to a different one of the plurality of different signal paths (K1,K2,K3) and to receive the received radar signals, the plurality of analog switches (816..820) being operative to route the received radar signals to different ones of the plurality of different signal paths (K1,K2,K3) in response to timing signals from the ring counter logic circuit.

9. The radar vehicle system of claim 4, wherein the receiver further includes a signal processor means coupled to the plurality of signal paths (K1,K2,K3), and responsive to the rate of phase shift in a received reflected signal corresponding to one of the succession of different frequencies, for determining opening or closing rate of the target reflecting back the radar signals, and responsive to phase shift differences between received reflected signals corresponding to two different ones of the succession of different frequencies, for determining range of the target reflecting back the radar signals.

10. The radar vehicle system of claim 9, wherein the signal processor means is analog.

11. The radar vehicle system of claim 9, wherein the signal processor means is digital.

12. The radar vehicle system of claim 6, wherein the radar signal receiver includes a data processor responsive to the range and the closing rate of the target reflecting back the radar signals for determining a hazard level of the target in accordance with an algorithm.

**Patentansprüche**

1. Kraftfahrzeugradarsystem zu dem gehören:

   a. Mittel (718,720,711,712), die dazu dienen, ein Radarsignal nacheinander auf mehreren unterschiedlichen Frequenzen zu übertragen, und die geeignet sind, das Radarsignal fortlaufend in einer Folge von Sendezeitframes (610) zu senden, von denen jeder wenigstens (1) einen ersten Abschnitt (620), währenddessen das Radarsignal auf einer Referenzfrequenz übertragen wird, und (2) einen zweiten Abschnitt (616,618) aufweist, währenddessen das Radarsignal auf einer von der Referenzfrequenz abweichenden Frequenz gesendet wird, wobei jeder derartige Abschnitt (616,618,620) ferner in mehrere Sendezeitintervallfenster (614) unterteilt ist;

   b. Mittel (714,718,722,726), die geeignet sind, die auf der Vielzahl von unterschiedlichen Frequenzen gesendeten, durch ein Zielobjekt zu dem Radarsystem reflektierten Radarsignale zu empfangen, und deren Aufgabe es ist, die reflektierten Radarsignale während eines Empfangszeitintervallfensters (614) zu empfangen, wobei jedes derartige Empfangszeitintervallfenster (614) einem Sendezeitintervallfenster (614) der Sendezeitframes (610) der Mittel zum aufeinanderfolgenden Senden entspricht;

   c. an die Empfangsmittel (714,718,722,726) angeschlossene Mittel (K1), die dazu dienen, in Abhängigkeit von dem Wert der Phasenverschiebung eines empfangenen Signals, das während eines aus den Empfangszeitintervallfenstern ausgewählten Zeitintervallfensters empfangen wurde, die Geschwindigkeit zu ermitteln, mit der sich das das Radarsignal reflektierende Zielobjekt entfernt bzw. nähert;

   d. an die Empfangsmittel (714,718,722,726) angeschlossene Mittel (K2, K3), die dazu dienen, den Abstand zu dem die Radarsignale zurückwerfenden Zielobjekt in Abhängigkeit von Differenzen der Phasenverschiebung zwischen Signalen zu ermitteln, die während eines ersten ausgewählten Zeitintervallfensters (614) empfangen werden, das einer ersten Sendefrequenz zugeordnet ist, und während eines zweiten ausgewählten Zeitintervallfensters (614) empfangen werden, das einer zweiten Sendefrequenz zugeordnet ist; und

   e. an die Empfangsmittel (714,718,722,726) und die Mittel (718,720,711,712) zum aufeinanderfolgenden Senden angeschlossene Mittel, die dazu dienen, Sendezeitintervallfenster und Empfangszeitintervallfenster (614) zu identifizieren, die nicht in Zusammenhang mit dem Empfang von gesendeten Radarsignalen genutzt werden;

   wobei jedes Empfangszeitintervallfenster (614), das nicht in Zusammenhang mit dem Empfang von gesendeten Radarsignalen genutzt wird, verfügbar ist, um andere Funktionen auszuführen, als das Ermitteln der Geschwindigkeit, mit der sich das die Radarsignale reflektierende Zielobjekt entfernt bzw. nähert, und das Ermitteln des Abstands zu dem Zielobjekt, das die Radarsignale reflektiert.

2. Kraftfahrzeugradarsystem nach Anspruch 1, bei dem die Mittel (718,720,711,712) für sukzessives Senden dazu dienen, um fortlaufend ein Radarsignal in einer Folge von Zeitframes (610) zu senden, von denen jeder (1) einen ersten Abschnitt (614), währenddessen das Radarsignal auf einer Referenzfrequenz gesendet wird, (2) einen zweiten Abschnitt (618), währenddessen das Radarsignal auf einer ersten Frequenz oberhalb der Referenzfrequenz gesendet wird, und (3) einen dritten Abschnitt (616) aufweist, während dessen das Radarsignal auf einer zweiten Frequenz unterhalb der Referenzfrequenz gesendet wird.

3. Kraftfahrzeugradarsystem nach Anspruch 1, bei dem die Dauer jedes Zeitintervalifensters von ca. 2 µs bis ca. 4,5 µs variieren kann.

4. Ein Kraftfahrzeugradarsystem in dem kombiniert enthalten sind:

   a. Mittel (718,720,711,712) zum aufeinanderfolgenden Senden von Radarsignalen auf drei unterschiedlichen Frequenzen in einer Folge von Zeitframes (610), wobei jeder derartige Zeitframe (610) ein Sendefrequenzintervall (616,618,620) aufweist, währenddessen eine entsprechende der drei unterschiedlichen Frequenzen gesendet wird, und jedes derartige Sendefrequenzintervall (616,618,620) in mehrere Sendezeitintervallfenster (614) unterteilt ist;

   b. Mittel (714,718,722,726), um die auf den drei unterschiedlichen Frequenzen gesendeten, durch ein Zielobjekt zu dem Radarsystem reflektierten Radarsignale zu empfangen, wobei das empfangene Signal Empfangsfrequenzintervalle (616,618,620) aufweist, von denen jedes einem eindeutigen Sendefrequenzintervall (616,618,620) entspricht, und in mehrere Empfangszeitintervallfenster (614) unterteilt ist, wobei jedes derartige Empfangszeitintervallfenster (614) einem eindeutigen Sendezeitintervallfenster (614) entspricht;

   c. Mittel, um die empfangenen Radarsignale den drei unterschiedlichen Frequenzen der Signale entsprechend in drei unterschiedliche Signalpfade zu verzweigen, derart dass jedem Signalpfad eigene Empfangszeitintervallfenster (614) zugeordnet sind;

   d. Mittel, die die Annäherungsgeschwindigkeit des die Radarsignale reflektierenden Zielobjekts ermitteln, und zwar in Abhängigkeit von dem Wert der Phasenverschiebung der Signale in einem ersten der drei unterschiedlichen Signalpfade während eines vorgegebenen Empfangszeitintervallfensters, das dem ersten Signalpfad zugeordnet ist;

   e. Mittel, die den Abstand zu dem die Radarsignale reflektierenden Zielobjekt ermitteln, und zwar in Abhängigkeit von der Differenz der Phasenverschiebung zwischen Signalen in dem zweiten und dem dritten der drei unterschiedlichen Signalpfade während eines vorgegebenen Empfangszeitintervallfensters, das dem zweiten Signalpfad zugeordnet ist, und eines vorgegebenen Zeitintervallfensters, das dem dritten Signalpfad zugeordnet ist; und

   f. an die Empfangsmittel und die Mittel (718,720,711,712) zum aufeinanderfolgenden Senden angeschlossene Mittel, um Sende- und Empfangszeitintervallfenster zu identifizieren, die nicht in Zusammenhang mit dem Empfang von gesendeten Radarsignalen genutzt werden;

   wobei jedes nicht in Zusammenhang mit dem Empfang von gesendeten Radarsignalen genutzte Empfangszeitintervallfenster verfügbar ist, um anstelle des Ermittelns der Annäherungsgeschwindigkeit des die Radarsignale reflektierenden Zielobjekts und des Ermitteins des Abstands zu dem die Radarsignale reflektierenden Zielobjekt andere Funktionen auszuführen.

5. Kraftfahrzeugradarsystem nach Anspruch 4, bei dem eine erste der drei unterschiedlichen Frequenzen unterhalb einer Referenzfrequenz liegt, eine zweite der drei unterschiedlichen Frequenzen oberhalb der Referenzfrequenz liegt und eine dritte der drei unterschiedlichen Frequenzen auf der Referenzfrequenz liegt.

6. Ein Kraftfahrzeugradarsystem in dem kombiniert sind:

   a. ein Sender (718,720,711,712), der dazu dient, fortlaufend ein Radarsignal in einer Folge von unterschiedlichen Frequenzen zu senden, wobei zu dem Sender gehören: ein Taktgenerator, um Taktsignale zu generieren, die für die unterschiedlichen Frequenzen Intervalle definieren und die innerhalb jedes Frequenzintervalls mehrere Sendezeitintervallfenster (614) definieren, ein Modulator, der in Abhängigkeit von den Zeittaktsignalen Signale erzeugt, die für gewünschte Frequenzen kennzeichnend sind, und ein Senderausgang, um Radarsignale auf Frequenzen zu senden, die durch die von dem Modulator ausgegebenen Signale ermittelte wurden; und

b. ein Empfänger (714,718,722,726), der dazu dient, die gesendeten, durch ein Zielobjekt zu dem Radarsystem reflektierten Radarsignale zu empfangen, und der mehrere Signalpfade, mehrere an die Vielzahl von Signalpfaden angeschlossene Prozessoreinheiten und einen Demodulator aufweist, der in Abhängigkeit von den durch den Taktgenerator erzeugten Zeittaktsignalen die empfangenen Radarsignale während eines ersten Satzes von vorgegebenen Zeitintervallfenstern (614) an einzelne ausgewählte Prozessoreinheiten verzweigt, um den Abstand und die Geschwindigkeit, mit der sich das Zielobjekt entfernt oder nähert zu ermitteln, und während eines zweiten Satzes von vorgegebenen Zeitintervallfenstern (614) die empfangenen Radarsignale an andere ausgewählte Prozessoreinheiten verzweigt, um Funktionen durchzuführen, die nicht in Zusammenhang mit dem Ermitteln des Abstandes und der Rate der Annäherung bzw. des Distanzgewinns stehen.

7. Kraftfahrzeugradarsystem nach Anspruch 4, bei dem der Modulator einen Spannungsregler und mehrere Frequenzregelungsschalter enthält, die an den Spannungsregler angeschlossen sind und dazu dienen, Spannungen zur Verfügung zu stellen, die in Abhängigkeit von Zeittaktsignalen aus der Logikschaltung des Ringzählers dem Sender (718,720,711,712) gewünschte Frequenzen zuweisen.

8. Kraftfahrzeugradarsystem nach Anspruch 4, bei dem der Demodulator (726) mehrere analoge Schalter (816..820) enthält, wobei ein jeder Schalter an einen anderen der unterschiedlichen Signalpfade (K1,K2,K3) angeschlossen ist, um die empfangenen Radarsignale entgegenzunehmen, und die Vielzahl der analogen Schalter (816..820) dazu dient, die empfangenen Radarsignale in Abhängigkeit von Zeittaktsignalen der Logikschaltung des Ringzählers an unterschiedliche der verschiedenen Signalpfade (K1,K2,K3) zu verzweigen.

9. Kraftfahrzeugradarsystem nach Anspruch 4, bei dem der Empfänger ferner ein an die Vielzahl von Signalpfaden (K1,K2,K3) angeschlossenes Signalverarbeitungsmittel enthält, das in Abhängigkeit von dem Wert der Phasenverschiebung eines empfangenen reflektierten Signals, das einer der Frequenzen aus der Folge von unterschiedlichen Frequenzen entspricht, die Geschwindigkeit ermittelt, mit der sich das die Radarsignale reflektierende Zielobjekt entfernt bzw. nähert, und in Abhängigkeit der Phasenverschiebungsdifferenzen zwischen empfangenen reflektierten Signalen, die zwei unterschiedlichen Frequenzen aus den Folgen von unterschiedlichen Frequenzen entsprechen, den Abstand zu dem die Radarsignale reflektierenden Zielobjekt ermittelt.

10. Kraftfahrzeugradarsystem nach Anspruch 9, bei dem das Signalverarbeitungsmittel analog arbeitet.

11. Kraftfahrzeugradarsystem nach Anspruch 9, bei dem das Signalverarbeitungsmittel digital arbeitet.

12. Kraftfahrzeugradarsystem nach Anspruch 6, bei dem der Radarsignalempfänger einen Datenprozessor enthält, der in Abhängigkeit von dem Abstand und der Annäherungsgeschwindigkeit des die Radarsignale reflektierenden Zielobjekts anhand eines Algorithmus eine Gefahrenpriorität des Zielobjekts ermittelt.

## Revendications

1. Un système radar pour véhicules comprenant :

a. des moyens (718,720,711,712) pour transmettre successivement un signal radar à une pluralité de fréquences différentes, et fonctionnant pour transmettre en continu le signal radar par une succession de trames temporelles de transmission (610), dont chacune comprend au moins (1) une première partie (620) pendant laquelle le signal radar est transmis à une fréquence de référence, et (2) une deuxième partie (616,618) pendant laquelle le signal radar est transmis à une fréquence différente de la fréquence de référence, chacune de ces parties (616,618,620) étant encore divisée en une pluralité de fenêtres d'intervalles de temps de transmission (614) ;

b. des moyens (714,718,722,726) pour recevoir les signaux radar transmis à la pluralité de fréquences différentes tels que réfléchis et renvoyés au système radar par une cible, et fonctionnant pour recevoir les signaux radar réfléchis pendant les fenêtres d'intervalles de temps de réception (614), chacune de ces fenêtres d'intervalles de temps de réception (614) correspondant à une fenêtre d'intervalle de temps de transmission (614) des trames de transmission (610) du moyen pour une transmission successive ;

c. un moyen (K1), couplé aux moyens (714,718, 722,726) pour la réception, réactif au taux de déphasage dans un signal de réception reçu dans une fenêtre sélectionnée parmi les fenêtres d'intervalles de temps de réception, pour déterminer la vitesse d'ouverture ou de fermeture de la cible réfléchissant et renvoyant les signaux radar ;

d. des moyens (K2,K3), couplés aux moyens (714,718,722,726) pour la réception, réactifs à des différences de déphasage entre des signaux reçus pendant une première fenêtre d'intervalles de temps sélectionnée (614) associée à une première fréquence de transmission et une deuxième fenêtre d'intervalles de temps sélectionnée (614) associée à une deuxième fréquence de transmission, pour déterminer la distance de la cible réfléchissant et renvoyant les signaux radar ; et

e. des moyens, couplés aux moyens (714,718,722,726) pour la réception et aux moyens (718,720,711,712) pour la transmission successive, pour identifier les fenêtres d'intervalles de temps de transmission et de réception (614) qui ne sont pas utilisées en rapport avec la réception de signaux radar transmis ;

par lesquels chaque fenêtre d'intervalles de temps de réception (614) qui n'est pas utilisée en rapport avec la réception de signaux radar transmis est disponible pour exécuter des fonctions autres que la détermination de la vitesse d'ouverture ou de fermeture de la cible réfléchissant et renvoyant les signaux radar, et la détermination de la distance de la cible réfléchissant et renvoyant les signaux radar.

2. Le système radar pour véhicules de la revendication 1, dans lequel le moyen (718,720,711,712) pour la transmission successive fonctionne pour transmettre en continu le signal radar par une succession de trames temporelles (610), dont chacune comprend (1) une première partie (614) pendant laquelle le signal radar est transmis à une fréquence de référence, (2) une deuxième partie (618) pendant laquelle le signal radar est transmis à une première fréquence supérieure à la fréquence de référence, et (3) une troisième partie (616) pendant laquelle le signal radar est transmis à une deuxième fréquence inférieure à la fréquence de référence.

3. Le système radar pour véhicules de la revendication 1, dans lequel chaque fenêtre d'intervalle de temps peut avoir une durée variant de 2 μs environ à 4,5 μs environ.

4. Un système radar pour véhicules comprenant la combinaison de :

a. de moyens (718,720,711,712) pour transmettre successivement les signaux radar à trois fréquences différentes, par une succession de trames (610), chacune de ces trames (610) comprenant un intervalle de fréquence de transmission (616,618,620) pendant lequel une fréquence correspondante parmi les trois fréquences différentes est transmise, chacun des ces intervalles de fréquence de transmission (616,618,620) étant divisé en une pluralité de fenêtres d'intervalles de temps de transmission (614) ;

b. moyens (714,718,722,726) pour recevoir les signaux radar transmis aux trois fréquences différentes tels que réfléchis et renvoyés au système radar par une cible, le signal reçu comprenant des intervalles de fréquence de réception (616,618,620), chacun correspondant à un seul intervalle de fréquence de transmission (616,618,620), et étant divisé en une pluralité de fenêtres d'intervalles de temps de réception (614), chacune de ces fenêtres d'intervalles de temps de réception (614) correspondant à une seule fenêtre d'intervalle de temps de transmission (614) ;

c. un moyen pour séparer les signaux radar reçus en trois trajets de signaux différents selon leurs trois fréquences différentes, de telle sorte que chaque trajet de signaux soit associé à des fenêtres d'intervalles de temps de réception (614) particulières ;

d. un moyen réactif au taux de déphasage de signaux dans un premier des trois trajets de signaux différents pendant une fenêtre prédéterminée d'intervalles de temps de réception associée au premier trajet de signaux pour déterminer la vitesse de fermeture de la cible réfléchissant et renvoyant les signaux radar ;

e. des moyens réactifs à des différences de déphasage entre des signaux dans le deuxième et le troisième des trois trajets de signaux différents pendant une fenêtre d'intervalles de temps de réception prédéterminée associée au deuxième trajet de signaux et une fenêtre d'intervalles de temps prédéterminée associée au troisième trajet de signaux pour déterminer la distance de la cible réfléchissant et renvoyant les signaux radar ; et

f. des moyens, couplés aux moyens pour la réception et aux moyens (718,720,711,712) pour la transmission successive, pour identifier les fenêtres d'intervalles de temps de transmission et de réception qui ne sont pas utilisées en rapport avec la réception de signaux radar transmis ;

combinaison par laquelle chaque fenêtre d'intervalles de temps de réception qui n'est pas utilisée en rapport avec la réception de signaux radar transmis est disponible pour exécuter des fonctions autres que la détermination de la vitesse de fermeture de la cible réfléchissant et renvoyant les signaux radar, et la détermination de la distance de la cible réfléchissant et renvoyant les signaux radar.

5. Le système radar pour véhicules de la revendication 4, dans lequel une première des trois fréquences différentes est inférieure à une fréquence de référence, une deuxième des trois fréquences différentes est supérieure à la fréquence de référence, et une troisième des trois fréquences différentes est à la fréquence de référence.

6. Un système radar pour véhicules comprenant la combinaison de :

    a. un émetteur (718,720,711,712) pour transmettre en continu un signal radar à une succession de fréquences différentes, et comprenant un générateur de rythme pour fournir des signaux de synchronisation définissant des intervalles pour les fréquences différentes et définissant une pluralité de fenêtres d'intervalles de temps de transmission (614) dans chaque intervalle de fréquences, un modulateur réactif aux signaux de synchronisation pour fournir de signaux indiquant les fréquences désirées, et une sortie d'émetteur pour transmettre des signaux radar à des fréquences déterminées par les signaux provenant du modulateur ; et

    b. un récepteur (714,718,722,726) pour recevoir les signaux radar transmis qui ont été réfléchis et renvoyés par une cible au système radar, et comprenant une pluralité de trajets de signaux, une pluralité de dispositifs de traitement couplés à la pluralité de trajets de signaux, et un démodulateur réactif aux signaux de synchronisation délivrés par le générateur de rythme afin d'acheminer les signaux radar reçus à des dispositifs sélectionnés parmi les dispositifs de traitement pendant un premier ensemble de fenêtres d'intervalles de temps (614) prédéterminées afin de déterminer la distance et la vitesse d'ouverture et de fermeture, et pour acheminer les signaux radar reçus à d'autres dispositifs de traitement sélectionnés, pendant un deuxième ensemble de fenêtres d'intervalles de temps (614) prédéterminées, pour exécuter des fonctions non reliées à la détermination de la distance et de la vitesse d'ouverture et de fermeture.

7. Le système radar pour véhicules de la revendication 4, dans lequel le modulateur comprend un régulateur de tension et une pluralité de commutateurs de commande de fréquence couplés au régulateur de tension et fonctionnant pour délivrer des tensions indiquant les fréquences souhaitées à l'émetteur (718,720,711,712) en réponse aux signaux de synchronisation provenant du circuit logique de compteur annulaire.

8. Le système radar pour véhicules de la revendication 4, dans lequel le démodulateur (726) comprend une pluralité de commutateurs analogiques (816. . 820), chacun étant couplé à un trajet différent d'une pluralité de trajets de signaux différents (K1, K2, K3) et pour recevoir les signaux radar reçus, la pluralité des commutateurs analogiques (816. . 820) fonctionnant pour acheminer les signaux radar reçus vers des trajets différents parmi la pluralité des trajets de signaux différents (K1, K2, K3) en réponse aux signaux de synchronisation provenant du circuit logique de compteur annulaire.

9. Le système radar pour véhicules de la revendication 4, dans lequel le récepteur comprend en outre un moyen de traitement de signaux couplé à la pluralité de trajets de signaux (K1, K2, K3), et réactif au taux de déphasage dans le signal réfléchi reçu correspondant à l'une parmi la succession de fréquences différentes, pour déterminer la vitesse d'ouverture ou de fermeture de la cible réfléchissant et renvoyant les signaux radar, et réactif aux différences de déphasage entre les signaux réfléchis reçus correspondant à deux fréquences différentes de la succession de fréquences différentes, pour déterminer la distance de la cible réfléchissant et renvoyant les signaux radar.

10. Le système radar pour véhicules de la revendication 9, dans lequel le moyen de traitement de signaux est analogique.

11. Le système radar pour véhicules de la revendication 9, dans lequel le moyen de traitement de signaux est numérique.

12. Le système radar pour véhicules de la revendication 6, dans lequel le récepteur de signaux radar comprend un dispositif de traitement de données réactif à la distance et à la vitesse de fermeture de l'obstacle réfléchissant et renvoyant les signaux radar, afin de déterminer le niveau de danger de la cible conformément à un algorithme.

FIG. 1

FIG. 2

BLOCKS FOR FRONT END ASSEMBLY

BLOCKS FOR SIGNAL CONDITIONING ASSEMBLY

EP 0 583 418 B1

FIG. 3

BLOCKS FOR SIGNAL CONDITIONING ASSEMBLY

# FIG 4A

BLOCKS IN SIGNAL PROCESSING ASSEMBLY

FIG. 4A

FIG. 4B

EP 0 583 418 B1

FIG. 4B

BLOCKS FOR DRIVING MONITOR

FIG. 5A

EP 0 583 418 B1

# FIG. 5B

| | | | | |
|---|---|---|---|---|
| DC AMP U21B (74) | THRESHOLD DETECTOR Q12 - Q14 (76) | LOGIC BUFFER U22 (78) | LOGIC SENSOR U23 (80) | |

B21 — THRESHOLD CONTROL
B8 → THRESHOLD DETECTOR → B16 → LOGIC BUFFER → B17 → LOGIC SENSOR
B19A — LOSS SIGNAL INDICATOR
B19 — HOLD SIGNAL
B10 — SIGNAL STRENGTH

LOG - LIN CONVERTER Q7 - Q11 (70)
DC OFFSET AMP U21A (72)
67 us MONOSTAB OSC (530)
100 ms 2ND ORDER INTEGR (536)
BOOT STRAP CIRCUIT (540)

(B) · B8 · S3 · S4 · S6 · S2

15 DB AMP (520)
SQUARING AMP (524)
PHASE LOCK LOOP (526)
÷2 FLIP FLOP (534)
VOLT TO FREQ CONVERTER (538)

A6B · P1 · S · S1 · S8 · S9

30 DB DE - EMPH. AMP (522)
MULTIPATH / TARGET DETECTOR (528)
10 ms MONOSTAB OSC (532)

B81 · B82 · K4 (B83)

2F

2V

EP 0 583 418 B1

FIG. 5C

EP 0 583 418 B1

FIG. 6

NOTE: 1. WINDOWS 1,3,4,6,8,9 ARE NOT USED IN THE RECEIVER THEY COULD BE USED FOR ANTENNA BEAM STEERING, TRANSPONDER PURPOSES, ETC.

EP 0 583 418 B1

# FIG. 7

EP 0 583 418 B1

FIG. 8

FIRST RANGE CHANNEL ( 24.124750 GHz )

DOPPLER CHANNEL ( 24.125 GHz )

SECOND RANGE CHANNEL ( 24.125250 GHz )

SAMPLES BY TIME SEQUENCE

SAMPLING OF PHASE SHIFTS

FIG. 9

EP 0 583 418 B1

SAMPLES COLLECTED
AT 18 μs INTERVALS

ENVELOPE AT 2.315 KHz

.86 μs

18 μs

SAMPLES

216 μs

SAMPLE CLOSING RATE ( 2.315 KHz )

PHASE SAMPLING OF CHANNELS K1,K2 AND K3

FIG. 10

EP 0 583 418 B1

FIG. 11A

FIG. 11 A
FIG. 11 B

SIGNAL
STRENGTH
THRESHOLD
FLAG

MULTIPATH / TARGET DETECTOR `1158` → 10ms MONOSTAB OSC `1162` → MULTI TARGET FLAG `1160`

PHASE LOCK LOOP `1124` → ÷2 FLIP FLOP `1136` → VOLT TO FREQ CONVERTER `1134` → BOOT-STRAP CIRCUIT `1132`

DOPPLER VOLTAGE `1130`

67 µs MONOSTAB OSC `1126` → 100ms 2nd ORDER INTEGR. `1128`

67 µs MONOSTAB OSC `1174` → 100ms 2nd ORDER INTEGR. `1176` → WINDOW COMPAR. `1178`

67 µs MONOSTAB OSC `1174` → 100ms 2nd ORDER INTEGR. `1176` → WINDOW COMPAR. `1178` → LOGICAL "OR" SWITCH `1180` → INTERFERENCE FLAG `1168`

SQUARING AMP `1140` → 180° RANGE DETECTOR `1144` → 100ms 5th ORDER INTEGR. `1152` → SAMPLE AND HOLD AMP `1154` → INVERTED RANGE VOLTAGE `1166`

RANGE HOLD

SQUARING AMP `1140` → DOPPLER DIRECTION DETECTOR `1146` → SHIFT REGISTER `1150` → DOPPLER DIRECTION FLAG `1148`

FIG. 11B

*722* MIXER — *1402* A/D — *1400* DSP

Fig. 12

**FIG. 12A**

**FIG. 12B**

**FIG. 12C**

**FIG. 13**

FIG. 14

DYNAMIC RANGE

-62db

8db

20 Hz                    14.4 KHz

DOPPLER FREQUENCY

" FREEWAY " CONDITIONING

FIG. 15

DYNAMIC RANGE

-62db

8db

20 Hz                    14.4 KHz

DOPPLER FREQUENCY

" RAIN " CONDITIONING

FIG. 16

FIG. 17 " VARIABLE ENVIRONMENT " CONDITIONING

FIG. 18